# NEUE EUROPÄISCHE PATENTSCHRIFT

(11) **EP 3 311 994 B2**
(45) Veröffentlichungstag und Bekanntmachung des Hinweises auf die Entscheidung über den Einspruch: **29.04.2026**
(45) Hinweis auf die Patenterteilung: 08.01.2020
(21) Anmeldenummer: 16195137.1
(22) Anmeldetag: 21.10.2016
(51) Int. Cl.: B29D 11/00, B29L 11/00

(54) **3D-DRUCKVERFAHREN ZUR HERSTELLUNG EINES BRILLENGLASES**
3D PRINTING METHOD FOR THE PRODUCTION OF A SPECTACLE LENS
PROCÉDÉ D'IMPRESSION 3D DESTINÉ À LA FABRICATION D'UN VERRE DE LUNETTE

(43) Veröffentlichungstag der Anmeldung: 25.04.2018
(73) Patentinhaber: Carl Zeiss Vision International GmbH, 73430 Aalen (DE)
(72) Erfinder: von Blanckenhagen, Bernhard, 73433 Aalen (DE); Totzeck, Michael, 73525 Schwäbisch Gmünd (DE); Glöge, Thomas, 73614 Schorndorf (DE)
(74) Vertreter: Glawe, Delfs, Moll

(56) Entgegenhaltungen:
- WO-A1-2016/003275
- WO-A1-2016/094706
- WO-A2-2009/041707
- US-A1- 2004 074 261
- US-A1- 2006 065 989
- US-A1- 2011 228 214
- US-A1- 2016 114 542
- US-A1- 2016 167 299
- US-A1- 2016 167 323
- US-B1- 6 632 535

## Beschreibung

Die vorliegende Erfindung betrifft ein 3D-Druckverfahren, zur Herstellung eines Brillenglases.

Bei Brillengläsern unterscheidet man zwischen Brillengläsern ohne nominelle dioptrische Wirkung und Korrektions-Brillengläsern, also Brillengläsern mit dioptrischer Wirkung. Dioptrische Wirkung ist nach der DIN EN ISO 13666 der Sammelbegriff für die fokussierende und die prismatische Wirkung eines Brillenglases.

Bei Korrektions-Brillengläsern unterscheidet man weiterhin zwischen Einstärken-Brillengläsern und Mehrstärken-Brillengläsern. Ein Einstärken-Brillenglas ist ein Brillenglas, bei dem nur eine dioptrische Wirkung vorhanden ist. Ein Mehrstärken-Brillenglas ist ein Brillenglas, bei dem zwei oder mehr verschiedene Bereiche mit unterschiedlichen dioptrischen Wirkungen im Brillenglas vorhanden sind.

Welche Form das Brillenglas auf seiner Vorderfläche und/oder Rückfläche erhalten muss, um die gewünschte optische Korrektur zu erhalten, wird maßgeblich von dem Werkstoff, aus welchem das Brillenglas gefertigt wird, bestimmt. Wichtigster Parameter ist hierbei der Brechungsindex des eingesetzten Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich. Der Brechungsindex der für Brillengläser geeigneten mineralischen Gläser kann höher sein als der Brechungsindex der für Brillengläser verwendbaren organischen Materialien. Brillengläser basierend auf mineralischen Gläsern zeichnen sich insbesondere durch ihre hohe Kratzfestigkeit und gute Chemikalienbeständigkeit aus. Im Vergleich hierzu zeichnen sich Brillengläser basierend auf organischen Materialien insbesondere durch ihr geringeres spezifisches Gewicht und ihre hohe Bruchfestigkeit aus.

Brillengläser basierend auf mineralischen Gläsern werden regelmäßig durch maschinelle mechanisch abrasive Bearbeitung eines Brillenglasrohlings erzeugt. Bei einem Brillenglasrohling entspricht weder die Vorderfläche noch die Rückfläche bereits den endgültigen, optisch wirksamen Zielflächen. Die für die Anordnung auf der Objektseite bestimmte optische Fläche eines Brillenglases wird als Vorderfläche bezeichnet, die für die Anordnung auf der Augenseite bestimmte optische Fläche eines Brillenglases wird Rückfläche genannt. Die dazwischen liegende entweder unmittelbar eine Kante bildende oder mittelbar über eine Kantenfläche einendseitig an die Vorderfläche und andernendseitig an die Rückfläche angrenzende Fläche bezeichnet man als Zylinderrandfläche. Die vorstehend definierten Begriffe Vorderfläche, Rückfläche und Zylinderrandfläche werden im Folgenden für Brillenglas-Halbfabrikate und Brillenglas-Fertigfabrikate analog verwendet.

Brillengläser basierend auf organischen Materialien werden beispielsweise als Brillenglas-Halbfertigfabrikate mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in JP 2008191186 A beschrieben ist. Die Rückfläche eines so hergestellten Brillenglas-Halbfabrikats kann beispielsweise maschinell mechanisch abrasiv unter Erhalt eines Brillenglas-Fertigfabrikats bearbeitet werden.

Brillenglas-Halbfertigfabrikate, auch als Halbfertigfabrikate, Halbfabrikate oder Halbfertigprodukte bezeichnet, sind Brillenglasrohlinge, deren Vorderfläche oder Rückfläche bereits der endgültigen, optisch wirksamen Zielfläche entspricht. Brillenglas-Fertigfabrikate, auch als Fertigfabrikate, Fertigprodukte oder fertige Brillengläser bezeichnet, sind Brillengläser, deren Vorder- und Rückfläche bereits die endgültige, optisch wirksame Zielfläche ist. Brillenglas-Fertigfabrikate können entweder beispielsweise als Brillenglas-Fertigfabrikate beispielsweise in Urformen mit Vorder- und Rückflächenformschalen, die mittels eines Dichtrings einen Hohlraum bildend voneinander beabstandet sind, abgegossen oder mittels eines Rx-Prozesses gefertigt werden. Brillenglas-Fertigfabrikate werden in der Regel noch formgerandet, d.h. durch Randbearbeitung in die endgültige, an die Brillenfassung angepasste Größe und Form gebracht.

WO 2016/003275 A1 offenbart ein Verfahren zum Drucken einer dreidimensionalen Linsenstruktur unter Zuhilfenahme eines Substrats, wobei das Substrat eine definierte Oberfläche aufweist. Die Oberfläche des Substrats kann mit einer Zwischenschicht aus einem flüssigen UV härtbaren oder wärmehärtbaren Polymer belegt sein, welches eine perfekte Anpassung der aufgebrachten Fragmente aus dem Druckprozess ermöglicht. Zwei der Linsenelemente können über ihre der dem Substrat gegenüberliegende plane Oberfläche zusammengefügt werden. Zwischen den beiden Linsenelementen kann dann wenigstens eine funktionelle Schicht, wie beispielsweise ein Filter oder ein elektrisch leitfähiges Polymer angeordnet sein. WO 2016/003275 A1 spricht nicht von Brillengläsern.

US 2006/0065989 A1 offenbart ein Verfahren zur Herstellung einer Linse, bei dem zunächst eine Hartlackschicht, eine Entspiegelungsschicht oder eine Entspiegelungsschicht und eine Hartlackschicht auf eine Oberfläche der Gießform aufgebracht wird bevor diese mit einer flüssigen Monomermischung aufgefüllt wird. Nach Aushärtung der Monomermischung wird die einseitig beschichtete Linse der Gießform entnommen.

US 2011/0228214 A1 offenbart ein Brillenglas mit einer Entspiegelungsschicht, welche sowohl unter Beleuchtung mit einem natürlichen Tageslichtspektrum als auch unter Beleuchtung mit einem vom natürlichen Tageslichtspektrum abweichenden Beleuchtungsspektrum einen farbneutral erscheinenden Restreflex erzeugt.

WO 2016/094706 A1 offenbart ein härtbares flüssiges Nanokomposit für die additive Herstellung von Linsen, wobei das Nanokomposit ein oder mehrere quervernetzbare Monomere oder Oligomere, einen Photoinitiator und Nanopartikel umfasst. Das Nanokomposit umfasst ungefähr 70 bis 98 Gew.-%, 75 bis 95 Gew.-%, 80 bis 95 Gew.-%, 80 bis 90 Gew.-% oder 82 bis 97 Gew.-%, bezogen auf das Gesamtgewicht des härtbaren Nanokomposits, quervernetzbare Monomere. Das Nanokomposit enthält ungefähr 70 bis 98 Gew.-%, 75 bis 95 Gew.-%, 80 bis 95 Gew.-% 80 bis 90 Gew.-% oder 82 bis 97 Gew.-%, bezogen auf das Gesamtgewicht des härtbaren Nanokomposits, Monoacrylate. Das Nanokomposit enthält ungefähr 30 bis 60 Gew.-%, ungefähr 35 bis 50 Gew.-% oder ungefähr 35 bis 45 Gew.-% Monoacrylate. Das Nanokomposit enthält Diacrylate und Triacrylate in einer Gesamtmenge von ungefähr 10 bis 50 Gew.-%, ungefähr 15 bis 45 Gew.-% oder ungefähr 20 bis 40 Gew.-%. Das Nanokomposit enthält sowohl quervernetzbare Monomere als auch Oligomere in einem Anteil von mehr als ungefähr 70 Gew.-%, bevorzugt mehr als ungefähr 75 Gew.-%, z.B. ungefähr 75 bis 99 Gew.-%, ungefähr 75 bis 95 Gew.-% oder ungefähr 80 bis 90 Gew.-%.

US 2016/01114542 offenbart ein 3D-Druckverfahren zur Herstellung eines Brillenglases.

Aufgabe der vorliegenden Erfindung war ein Verfahren bereitzustellen, welches eine Vorort-Anfertigung eines Brillenglases ermöglicht.

Diese Aufgabe wurde gelöst durch Bereitstellung eines Verfahrens zur Herstellung eines Brillenglases, wobei das Verfahren die folgenden Schritte umfasst:
i. Bereitstellen eines bedruckbaren beschichteten Substrats, wobei das Substrat optional mit einer ablösbaren Haftschicht belegt ist und die Beschichtung des Substrat aus der Gruppe bestehend aus wenigstens einer Hartlackschicht, wenigstens einer Entspiegelungsschicht, wenigstens einer elektrisch leitfähigen oder halbleitenden Schicht, wenigstens einer Antibeschlagsschicht und/oder wenigstens einer Clean-Coat-Schicht ausgewählt ist,
ii. Bereitstellen eines dreidimensionalen Modells des Brillenglases,
iii. Digitales Zerschneiden des dreidimensionalen Modells aus Schritt ii. in einzelne zweidimensionale Lagen,
iv. Bereitstellen wenigstens einer 3D-Drucktinte,
   Aufbau des Brillenglases aus der Summe der einzelnen zweidimensionalen Lagen aus Schritt iii. mittels eines Druckvorgangs auf dem Substrat,
v. Aushärtung des Brillenglases, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann,
vi. optional Fräsen und/oder Schleifen und/oder Drehen und/oder Polieren der in Schritt vi. erhaltenen Oberfläche des Brillenglases, welche nicht an das Substrat angrenzt,
vii. Ablösen des in Schritt vii. erhaltenen Brillenglases mitsamt der Beschichtung vom Substrat,
viii. optional Beschichten der der Substrat abgewandten Oberfläche des Brillenglases, optional Formranden des in Schritt ix. erhaltenen Brillenglases.

Bevorzugte Weiterbildungen sind in den abhängigen Ansprüchen angegeben.

Die vorliegende Erfindung bezieht sich ausschließlich auf Brillengläser, nicht auf Kontaktlinsen.

Der Aufbau eines erfindungsgemäßen Brillenglases erfolgt mittels eines 3D-Druckverfahrens durch Bedrucken eines vorbeschichteten Substrats. Das vorbeschichtete Substrat definiert hierbei die Oberflächentopographie derjenigen Oberfläche des Brillenglases, welche an das vorbeschichtete Substrat angrenzt. Die dieser Oberfläche gegenüberliegende Fläche des Brillenglases kann mittels eines 3D-Druckverfahrens gezielt aufgebaut werden. Beim 3D-Druckverfahren handelt es sich um ein additives Herstellungsverfahren, bei welchem die gewünschte Oberflächentopographie einer der Oberflächen des Brillenglases ausschließlich durch Materialauftrag hergestellt wird. Die dreidimensionale Form des zu druckenden Brillenglases, welche auch individuell angepasste Aspekte, wie beispielsweise den Durchmesser, den Krümmungsradius, oder individuelle Rezeptwerte, wie beispielsweise eine Progressionsfläche mit vorgegebenem Progressionswert und Verlauf des Progressionskanals berücksichtigen kann, wird zunächst digital in zweidimensionale, horizontale Lagen geschnitten. Die Information über die einzelnen zweidimensionalen, übereinander zu druckenden Lagen, wird dem 3D-Drucker zur Verfügung gestellt und das Brillenglas hiermit aus der Summe der einzelnen zweidimensionalen Lagen aufgebaut. Eine zu druckende Lage umfasst die nebeneinander Anordnung von Volumenelementen - d.h. die nebeneinander Anordung von 3D-Drucktinte nach Ausgabe aus einem für den 3D-Druck geeigneten Druckkopf in einer Fläche, wobei die Abmessungen der Volumenelemente unter anderem abhängig von dem Durchmesser der Druckkopfdüsen sind. Das kleinste mögliche Volumenelement entspricht dem Volumen eines Tropfens 3D-Drucktinte. Es können mehrere Lagen von nebeneinander angeordneten Volumenelementen übereinander angeordnet, d.h. übereinander gedruckt, werden. Die flächenmäßige Ausdehnung und die Anzahl der übereinander zu druckenden Lagen hängt von den gewünschten Abmessungen des zu druckenden Brillenglases ab. Die Aushärtung der einzelnen Lagen kann lagenweise, vorzugsweise mittels UV-Licht, bis zur vollständigen Abreaktion der strahlungshärtbaren Komponente erfolgen. Alternativ kann nach dem Drucken jeder Lage eine nicht komplette Aushärtung, und nach dem Drucken aller Lagen eine endgültige Aushärtung, jeweils vorzugsweise mittels UV-Licht, erfolgen.

Der 3D-Drucker umfasst wenigstens einen Druckkopf, welcher nach dem, aus dem Tintenstrahldruck bekannten Drop-on-demand Verfahren Volumenelemente über ein piezoelektrisches Element erzeugt und ein Volumenelement immer nur genau an der Stelle platziert, wo dieses auch benötigt wird. Der wenigstens eine Druckkopf kann sich über das vorbeschichtete Substrat bewegen und/oder vorbeschichtete Substrat kann sich unter dem wenigstens einen Druckkopf bewegen. Vorzugsweise wird als 3D-Druckverfahren das Multi-Jet-Modeling bzw. Polyjet Verfahren eingesetzt. Als Drucckopf kann beispielsweise der Druckkopf Xaar 1001 (Fa. Xaar), einer der Druckköpfe Spectra S-Class, Spectra SE3, Spectra SX3, Spectra Q-class (Fa. Spectra), der Druckkopf KM512 (Fa. Konica Minolta) und/oder der Druckkopf 256Jet S4 (Fa. Trident) zum Einsatz kommen. Die Auflösung des Druckkopfs beträgt bevorzugt mindestens 300 x 300 dpi, weiter bevorzugt mindestens 600 x 600 dpi und besonders bevorzugt mindestens 1200 x 1200 dpi. Bevorzugt ist an wenigstens einer Seite des eingesetzten Druckkopfs wenigstens eine UV-Lichtquelle, besonders bevorzugt ist an wenigstens zwei Seiten des eingesetzten Druckkopfs wenigstens eine UV-Lichtquelle angebracht. Alternativ können mehrere Druckköpfe parallel in einem 3D-Drucker verbaut und selektiv angesteuert werden. Die UV-Lichtquelle kann dann aus mehreren ebenfalls parallel geschalteten UV-Lichtquellen oder aus wenigen, großen UV-Lichtquellen bestehen.

Das mittels eines 3D-Druckverfahrens hergestellte Brillenglas kann wenigstens einen weiteren mechanischen Bearbeitungsschritt, wie beispielsweise Polieren, erfordern. Vorzugsweise benötigt das mittels eines 3D-Druckverfahrens hergestellte Brillenglas keinen weiteren mechanischen Bearbeitungsschritt wie beispielsweise Fräsen und/oder Schleifen und/oder Drehen und/oder Polieren.

Für den lagenweisen Aufbau des Brillenglases wird bevorzugt eine im 3D-Druckverfahren einsetzbare Drucktinte eingesetzt. "Lagenweiser Aufbau" umfasst eine aufeinanderfolgende Ablagerung der 3D-Drucktinte. Die aufeinanderfolgende Ablagerung kann hierbei sowohl nebeneinander in einer Fläche als auch übereinander in der Höhe erfolgen. Erfolgt beispielsweise eine erste Ablagerung der 3D-Drucktinte in einer Fläche auf dem vorbeschichteten Substrat, kann eine weitere Lage über die komplette Fläche der ersten Ablagerung oder einen Teil der Fläche der ersten Ablagerung gedruckt werden. Vorzugsweise erfolgt die aufeinanderfolgende Ablagerung der 3D-Drucktinte zunächst nebeneinander in einer Fläche, bevor dann eine weitere aufeinanderfolgende Ablagerung der 3D-Drucktinte in der darüber liegenden Lage erfolgt.

Als zu bedruckendes vorbeschichtetes Substrat wird ein Substrat verwendet werden, das ausgehend vom Substrat a) optional mit einer ablösbaren Haftschicht und b) mit der auf dem Brillenglas gewünschten Beschichtung belegt ist. Bei der optional vorhandenen Haftschicht handelt es sich um eine direkt auf dem Substrat aufgebrachte Schicht, deren Haftung durch äußere Einflüsse, wie beispielsweise eine Temperaturänderung oder durch Bestrahlung, verändert werden kann und somit das mittels eines 3D-Druckverfahrens hergestellte Brillenglas mitsamt der auf der optional vorhandenen ablösbaren Haftschicht vorliegenden Beschichtung von dieser abgelöst werden kann. Alternativ kann es sich bei der direkt an das Substrat angrenzenden Schicht um eine einfach vom Substrat zu trennende Schicht handeln. Vorzugsweise handelt es sich hierbei um eine Clean-Coat-Schicht, welche nach Abtrennung des gedruckten Brillenglases die außenliegende Schicht einer der Oberflächen des Brillenglases darstellt. So kann auf einfachste Weise ein Brillenglas dargestellt werden, welches auf einer Oberfläche bereits mit einer gewünschten Beschichtung belegt ist. Hierbei versteht es sich von selbst, dass das Substrat mit einer Schichtenfolge bedruckt werden muss, welche der umgekehrten Reihenfolge der Beschichtung entspricht, wie sie anschließend auf dem Brillenglas gewünscht ist. Eventuell am resultierenden beschichteten Brillenglas verbleibende Reste der optional vorhandenen ablösbaren Haftschicht können mittels eines Reinigungsverfahrens entfernt werden.

Das vorbeschichtete Substrat kann konvex oder konkav ausgeformt sein. Die Oberflächentopographie des vorbeschichteten Substrats kann aus der Gruppe bestehend aus sphärisch, asphärisch, torisch, atorisch, progressiv und plan ausgewählt sein.

Die Begriffe "Schicht" und "Beschichtung" werden im Rahmen dieser Erfindung austauschbar verwendet.

Das Substrat kann beispielsweise aus Polytetrafluorethylen, Glas oder Metall gefertigt sein. Bei einer Ausführungsform kann das Substrat eine Trennschicht umfassend Alkyltrihalogensilane, bevorzugt C₁₂ bis C₂₂ Alkyltrichlorsilane und ganz bevorzugt Octadecyltrichlorsilan aufweisen.

Das vorbeschichtete Substrat ist mit wenigstens einer Schicht ausgewählt aus der Gruppe bestehend aus wenigstens einer Hartlackschicht, wenigstens einer Entspiegelungsschicht, wenigstens einer elektrisch leitfähigen oder halbleitenden Schicht, wenigstens einer Antibeschlagsschicht und/oder wenigstens einer Clean-Coat-Schicht beschichtet. Bevorzugt ist das vorbeschichtete Substrat mit wenigstens einer Entspiegelungsschicht, wenigstens einer Hartlackschicht und wenigstens einer Clean-Coat-Schicht belegt.

Umfasst das Substrat eine Hartlackschicht, umfasst diese vorzugsweise eine Zusammensetzung für die Herstellung einer Beschichtung mit hoher Haftfestigkeit und hoher Kratzbeständigkeit, wie beispielsweise in EP 2 578 649 A1, insbesondere in EP 2 578 649 A1, Anspruch 1, beschrieben.

Umfasst das Substrat eine wenigstens Entspiegelungsschicht, so umfasst diese bevorzugt alternierende diskrete Metalloxid-, Metallhydroxid- und/oder Metalloxidhydratschichten aus oder mit Aluminium, Silizium, Zirkonium, Titan, Yttrium, Tantal, Neodym, Lanthan, Niob und/oder Praseodym.

Bei einer Ausführungsform weist die wenigstens eine Entspiegelungsschicht des Brillenglases eine Gesamtschichtdicke aus einem Bereich von 97 nm bis 2000 nm, bevorzugt aus einem Bereich von 112 nm bis 1600 nm, weiter bevorzugt aus einem Bereich von 121 nm bis 1110 nm, besonders bevorzugt aus einem Bereich von 132 nm bis 760 nm und ganz besonders bevorzugt aus einem Bereich von 139 nm bis 496 nm auf. Die Entspiegelungsschicht umfasst hierbei bevorzugt eine Metalloxid-, Metallhydroxid- und/oder Metalloxidhydratschicht aus oder mit Silizium, welche bevorzugt die äußerste Schicht der Entspiegelungsschicht ausbildet und somit am substratnächsten aufzubringen ist.

Umfasst das Substrat wenigstens eine elektrisch leitfähige oder halbleitende Schicht, kann diese beispielsweise eine Schicht aus oder mit Indium-Zinn-Oxid (((In₂O₃)_{0.9} (SnO₂)_{0.1}; ITO), Fluor-Zinn-Oxid (SnO₂:F; FTO), Aluminium-Zink-Oxid (ZnO:Al; AZO) und/oder Antimon-Zinn-Oxid (SnO₂:Sb; ATO) umfassen. Bevorzugt umfasst die elektrisch leitfähige oder halbleitende Schicht eine Schicht aus oder mit ITO bzw. aus oder mit FTO. Die elektrisch leitfähige oder halbleitende Schicht kann als Bestandteil der Entspiegelungsschicht vorliegen.

Umfasst das Substrat eine wenigstens Antibeschlagsschicht, umfasst diese bevorzugt ein Silanderivat gemäß EP 2 664 659 A1, besonders bevorzugt gemäß Anspruch 4 der EP 2 664 659 A1. Alternativ kann die Antibeschlagsschicht auch gemäß dem in DE 10 2015 209 794 beschriebenen Verfahren, insbesondere gemäß des in Anspruch 1 der DE 10 2015 209 794 beschriebenen Verfahrens, hergestellt werden
Umfasst das Substrat wenigstens eine Clean-Coat-Schicht, umfasst diese vorzugsweise ein Material mit oleophoben und hydrophoben Eigenschaften, wie beispielsweise in EP 1 392 613 A1 offenbart, auf dem Wasser einen Kontaktwinkel von mehr als 90°, bevorzugt von mehr als 100° und besonders bevorzugt mehr als 110° einnimmt. Die Clean-Coat-Schicht umfasst bevorzugt eine fluororganische Schicht mit kovalenter Anbindung an das Substrat gemäß DE 198 48 591 A1, Anspruch 1, oder eine Schicht auf Basis von Perfluorpolyethern.

Die Beschichtung des Substrats kann mittels eines PVD-Verfahrens und/oder eines Schleuderbeschichtungsverfahrens erfolgen, die Beschichtung mit der wenigstens einen Entspiegelungsschicht erfolgt bevorzugt mittels eines PVD-Verfahrens.

Bevorzugt in die Schichtenfolge der auf dem Substrat vorliegenden Schichten ausgehend vom Substrat wie folgt:
a) optional eine ablösbare Haftschicht,
b) wenigstens eine Clean-Coat-Schicht und/oder wenigstens eine Antibeschlagsschicht
c) wenigstens eine Entspiegelungsschicht,
d) optional wenigstens eine elektrisch leitfähige oder halbleitende Schicht,
e) wenigstens eine Hartlackschicht.

Die nicht dem Substrat zugewandte Oberfläche des Brillenglases kann ebenfalls mit den oben aufgeführten Schichten belegt sein. In diesem Fall ist ausgehend von der Oberfläche des Brillenglases, welche dem Substrat gegenüberliegt die nachstehende Schichtenfolge bevorzugt:
a) wenigstens eine Hartlackschicht,
b) optional wenigstens eine elektrisch leitfähige oder halbleitende Schicht,
c) wenigstens eine Entspiegelungsschicht,
d) optional wenigstens eine Clean-Coat-Schicht und/oder wenigstens eine Antibeschlagsschicht.

Die zum Drucken des Brillenglases einsetzbare 3D-Drucktinte umfasst wenigstens eine strahlungshärtbare Komponente, optional wenigstens ein Farbmittel, optional wenigstens einen UV-Initiator, optional wenigstens ein Lösungsmittel und optional wenigstens ein Additiv.

Die strahlungshärtbare Komponente, vorzugsweise UV-härtbare Komponente, umfasst bevorzugt (Meth)acrylatmonomere, Epoxymonomere, Vinyl- und Allylmonomere, besonders bevorzugt (Meth)acrylatmonomere. Bei den (Meth)acrylatmonomeren kann es sich bevorzugt um monofunktionale, difunktionale, trifunktionale und/oder tetrafunktionale (Meth)acrylatmonomere handeln. Bei den Epoxymonomeren kann es sich bevorzugt um monofunktionale, difunktionale, trifunktionale und/oder tetrafunktionale Epoxymonomere handeln. Bei den Vinyl- und Allylmonomere kann es sich bevorzugt um monofunktionale, difunktionale, trifunktionale und/oder tetrafunktionale Vinyl- und Allylmonomere handeln.

Bei einer Ausführungsform weisen die als strahlungshärtbare Komponente, vorzugsweise UV-härtbare Komponente, einsetzbaren monofunktionalen (Meth)acrylatmonomere, Epoxymonomere, Vinyl- und Allylmonomere bevorzugt eine Viskosität aus einem Bereich von 0,5 mPa·s bis 30,0 mPa·s, besonders bevorzugt aus einem Bereich von 1,0 mPa·s bis 25,0 mPa·s und ganz besonders bevorzugt aus einem Bereich von 1,5 mPa·s bis 20,0 mPa·s auf.

Bei einer Ausführungsform weisen die als strahlungshärtbare Komponente, vorzugsweise UV-härtbare Komponente, einsetzbaren difunktionalen (Meth)acrylatmonomere, Epoxymonomere, Vinyl- und Allylmonomere bevorzugt eine Viskosität aus einem Bereich von 1,5 mPa·s bis 17,0 mPa·s besonders bevorzugt aus einem Bereich von 2,5 mPa·s bis 14,0 mPa·s und ganz besonders bevorzugt aus einem Bereich von 3,0 mPa·s bis 11,0 mPa·s auf.

Bei einer Ausführungsform weisen die als strahlungshärtbare Komponente, vorzugsweise UV-härtbare Komponente, einsetzbaren trifuntionktionellen (Meth)acrylatmonomere, Epoxymonomere, Vinyl- und Allylmonomere bevorzugt eine Viskosität aus einem Bereich von 20,0 mPa·s bis 110,0 mPa·s, besonders bevorzugt aus einem Bereich von 22,0 mPa·s bis 90,0 mPa·s und ganz besonders bevorzugt aus einem Bereich von 24,0 mPa·s bis 83,0 mPa·s auf.

Bei einer Ausführungsform weisen die als strahlungshärtbare Komponente, vorzugsweise UV-härtbare Komponente, einsetzbaren tetrafunktionalen (Meth)acrylatmonomere, Epoxymonomere, Vinyl- und Allylmonomere bevorzugt eine Viskosität aus einem Bereich von 60,0 mPa·s bis 600,0 mPa·s, besonders bevorzugt aus einem Bereich von 70,0 mPa·s bis 460,0 mPa·s und ganz besonders bevorzugt aus einem Bereich von 80,0 mPa·s bis 270,0 mPa·s auf.

Die Viskosität der (Meth)acrylatmonomere, Epoxymonomere, Vinyl- und Allylmonomere wird jeweils vorzugsweise mit einem Rheometer C-VOR 150 der Fa. Malvern mit der Vorgabe einer Winkelgeschwindigkeit von 5,2 rad/sec bei 25°C gemessen.

Die jeweiligen (Meth)acrylatmonomere, Epoxymonomere, Vinyl- und Allylmonomere können jeweils beispielsweise durch Zugabe wenigstens eines Lösungsmittels auf die gewünschte Viskosität eingestellt werden.

Die Viskosität der 3D-Drucktinte kann beispielsweise durch Mischung verschiedener (Meth)acrylatmonomere, Epoxymonomere, Vinyl- und/oder Allylmonomere, beispielsweise durch Mischung monofunktionaler (Meth)acrylatmonomere, Epoxymonomere, Vinyl- und/oder Allylmonomere und difunktionaler (Meth)acrylatmonomere, Epoxymonomere, Vinyl- und/oder Allylmonomere und/oder trifunktionaler (Meth)acrylatmonomere, Epoxymonomere, Vinyl- und/oder Allylmonomere, eingestellt werden. Alternativ oder zusätzlich zur Mischung verschiedener (Meth)acrylatmonomere, Epoxymonomere, Vinyl- und/oder Allylmonomere kann die Viskosität durch Zugabe wenigstens eines Lösungsmittels eingestellt werden.

Als monofunktionale (Meth)acrylatmonomere können beispielsweise Acrylsäure (CAS Nr. 79-10-7), Methacrylsäure (CAS Nr. 79-41-4), Methylacrylat (CAS Nr. 96-33-3), Methylmethacrylat (CAS Nr. 80-62-6), Ethylacrylat (CAS Nr. 140-88-5), Ethylmethacrylat (CAS Nr. 97-63-2), Ethyl-2-ethylacrylat (CAS Nr. 3070-65-3), (2,2-dimethyl-1,3-dioxolan-4-yl)methylmethacrylat (CAS Nr. 7098-80-8), 2-Phenoxyethylacrylat (CAS Nr. 48145-04-6), Isobornylacrylat (CAS Nr. 5888-33-5), 2-(2-Methoxyethoxy)ethylmethacrylat (CAS Nr. 45103-58-0), 4-Acryloylmorpholin (CAS Nr. 5117-12-4), Dodecylacrylat (CAS Nr. 2156-97-0), Isodecylacrylat (CAS Nr. 1330-61-6), Decylacrylat (CAS Nr. 2156-96-9), n-Octylacrylat (CAS Nr. 2499-59-4), Isooctylacrylat (CAS Nr. 29590-42-9), Octadecylacrylat (CAS Nr. 4813-57-4), Tetrahydrofurfurylacrylat (CAS Nr. 2399-48-6), 2-(2-Ethoxyethoxy)ethylacrylat (CAS Nr. 7328-17-8), 4-tert-Butylcyclohexylacrylat (CAS Nr. 84100-23-2), Methoxypoly(ethylenglycol)monoacrylat (CAS Nr. 32171-39-4), Phenoxypolyethylenglycolacrylat (CAS Nr. 56641-05-5), Mono-2-(acryloyloxy)ethylsuccinat (CAS Nr. 50940-49-3), Allylmethacrylat (CAS Nr. 96-05-9) oder Mischungen davon eingesetzt werden.

Bevorzugt werden als monofunktionale (Meth)acrylatmonomere Acrylsäure, Methacrylsäure, Methylacrylat, Methylmethacrylat, Ethylacrylat, Ethylmethacrylat, 2-Phenoxyethylacrylat, Dodecylacrylat oder Mischungen davon, besonders bevorzugt werden Methacrylsäure, Methylmethacrylat, Ethylmethacrylat oder Mischungen davon eingesetzt.

Als difunktionale (Meth)acrylatmonomere können beispielsweise Ethylenglykoldiacrylat (CAS Nr. 2274-11-5), Diethylenglykoldiacrylat (CAS Nr. 2274-11-5), Triethylenglykoldiacrylat (CAS Nr. 1680-21-3), Tetraethylenglykoldiacrylat (CAS Nr. 17831-71-9), Ethylenglykoldimethacrylat (CAS Nr. 97-90-5), Diethylenglykoldimethacrylat (CAS Nr. 2358-84-1), Triethylenglykoldimethacrylat (CAS Nr. 109-16-0), Tetraethylenglycoldimethacrylat (CAS Nr. 109-17-1), Polyethylenglykol 200 dimethacrylat (CAS Nr. 25852-47-2), Dipropylenglykoldiacrylat (CAS Nr. 57472-68-1), Tripropylenglykoldiacrylat (CAS Nr. 42978-66-5), 1,3-Butandioldiacrylat (CAS Nr. 19485-03-1), 1,4-Butandioldiacrylat (CAS Nr. 1070-70-8), 1,6-Hexandioldiacrylat (CAS Nr. 13048-33-4), Neopentylglycoldiacrylat (CAS Nr. 2223-82-7), 1,3-Butandioldimethacrylat (CAS Nr. 1189-08-8), 1,4-Butandioldimethacrylat (CAS Nr. 2082-81-7), 1,6-Hexandioldimethacrylat (CAS Nr. 6606-59-3) oder Mischungen davon eingesetzt werden.

Bevorzugt werden als difunktionale (Meth)acrylatmonomere Polyethylenglykol 200 dimethacrylat, Ethylenglykoldimethacrylat, Diethylenglykoldimethacrylat, 1,4-Butandioldimethacrylat oder Mischungen davon, besonders bevorzugt werden Ethylenglykoldimethacrylat, Diethylenglykoldimethacrylat oder Mischungen davon eingesetzt.

Als trifunktionale (Meth)acrylatmonomere können beispielsweise Trimethylolpropantrimethacrylat (CAS Nr. 3290-92-4), Trimethylolpropantriacrylat (CAS Nr. 15625-89-5), Pentaerythritoltriacrylat (CAS Nr. 3524-68-3), Pentaerythritolpropoxylattriacrylat (CAS Nr. 145611-81-0), Trimethylolpropanpropoxylattriacrylat (CAS Nr. 53879-54-2), Trimethylolpropanethoxylattriacrylat (CAS Nr. 28961-43-5) oder Mischungen davon eingesetzt werden.

Bevorzugt werden als trifunktionale (Meth)acrylatmonomere Trimethylolpropantrimethacrylat, Pentaerythritoltriacrylat oder Mischungen davon, besonders bevorzugt wird Trimethylolpropantrimethacrylat eingesetzt.

Als tetrafunktionale (Meth)acrylatmonomere können beispielsweise Di(trimethylolpropan)tetraacrylat (CAS Nr. 94108-97-1), Pentaerythritoltetraacrylat (CAS Nr. 4986-89-4), Pentaerythritoltetramethacrylat (CAS Nr. 3253-41-6) oder Mischungen davon eingesetzt werden.

Bevorzugt werden als tetrafunktionale (Meth)acrylatmonomere Di(trimethylolpropan)tetraacrylat, Pentaerythritoltetramethacrylat oder Mischungen davon, besonders bevorzugt Di(trimethylolpropan)tetraacrylat eingesetzt.

Als monofunktionale Epoxymonomere können beispielsweise Ethylglycidylether (CAS Nr. 4016-11-9), n-Butylglycidylether (CAS Nr. 2426-08-6), 2-Ethylhexylglycidylether (CAS Nr. 2461-15-6), C8-C10-Glycidylether (CAS Nr. 68609-96-1), C12-C14-Glycidylether (CAS Nr. 68609-97-2), Cresylglycidylether (CAS Nr. 2210-79-9), p-tert-Butylphenylglycidylether (CAS Nr. 3101-60-8), Nonylphenylglycidylether (CAS Nr. 147094-54-0), Benzylglycidylether (CAS Nr. 2930-05-4), Phenylglycidylether (CAS Nr. 122-60-1), Bisphenol A-(2,3-dihydroxypropyl)glycidylether (CAS Nr. 76002-91-0) oder Mischungen davon zum Einsatz kommen.

Bevorzugt kommen als monofunktionale Epoxymonomere Ethylglycidylether, n-Butylglycidylether, 2-Ethylhexylglycidylether oder Mischungen hiervon, besonders bevorzugt Ethylglycidylether, n-Butylglycidylether oder Mischungen hiervon zum Einsatz.

Als difunktionale Epoxymonomere können beispielsweise Diglycidylether (CAS Nr. 2238-07-5), Ethylenglycoldiglycidylether (CAS Nr. 2224-15-9), Diethylenglykoldiglycidylether (CAS Nr. 4206-61-5), Propylenglykoldiglycidylether (CAS Nr. 16096-30-3), Dipropylenglycoldiglycidylether (CAS Nr. 41638-13-5), 1,4-Butandioldiglycidylether (CAS Nr. 2425-79-8), 1,4-Cyclohexandimethanoldiglycidylether (CAS Nr. 14228-73-0), Neopentylglycoldiglycidylether (CAS Nr. 17557-23-2), Polypropylenglycol(400)diglycidylether (CAS Nr. 26142-30-3), 1,6-Hexandioldiglycidylether (CAS Nr. 16096-31-4), Bisphenol A-diglycidylether (CAS Nr. 1675-54-3), Bisphenol-A-propoxylat-diglycidylether (CAS Nr. 106100-55-4), Polyethylenglykoldiglycidylether (CAS Nr. 72207-80-8), Glyceroldiglycidylether (CAS Nr. 27043-36-3), Resorcinoldiglycidylether (CAS Nr. 101-90-6) oder Mischungen davon in der erfindungsgemäßen 3D-Drucktinte verwendet werden.

Bevorzugt kommen als difunktionale Epoxymonomere Diglycidylether, Ethylenglycoldiglycidylether, Diethylenglykoldiglycidylether, 1,4-Butandioldiglycidylether, Polyethylenglykoldiglycidylether, Polypropylenglycol(400)diglycidylether oder Mischungen hiervon, besonders bevorzugt Ethylenglycoldiglycidylether, Diethylenglykoldiglycidylether, 1,4-Butandioldiglycidylether, Polyethylenglykoldiglycidylether oder Mischungen hiervon zum Einsatz.

Als trifunktionale Epoxymonomere können beispielsweise Trimethylolethantriglycidylether (CAS Nr. 68460-21-9), Trimethylolpropantriglycidylether (CAS Nr. 30499-70-8), Triphenylolmethantriglycidylether (CAS Nr. 66072-38-6), Tris(2,3-epoxypropyl)isocyanurat (CAS Nr. 2451-62-9), Tris(4-hydroxyphenyl)methantriglycidylether (CAS Nr. 66072-38-6), 1,1,1-Tris(4-hydroxyphenyl)ethantriglycidylether (CAS Nr. 87093-13-8), Glyceroltriglycidylether (CAS Nr. 13236-02-7), Glycerolpropoxylattriglycidylether (CAS Nr. 37237-76-6), N,N-Diglycidyl-4-glycidyloxyanilin (CAS Nr. 5026-74-4) oder Mischungen davon eingesetzt werden.

Bevorzugt kommen als trifunktionale Epoxymonomere Trimethylolpropantriglycidylether, Tris(2,3-epoxypropyl)isocyanurat, Glyceroltriglycidylether, Glycerolpropoxylattriglycidylether oder Mischungen hiervon, besonders bevorzugt Tris(2,3-epoxypropyl)isocyanurat, Glyceroltriglycidylether oder Mischungen hiervon zum Einsatz.

Als tetrafunktionale Epoxymonomere können beispielsweise Pentaerythritoltetraglycidylether, (CAS Nr. 3126-63-4), Dipentaerythritoltetraglycidylether, Tetraglycidylbenzylethan, Sorbitoltetraglycidylether, Tetraglycidyldiaminophenylmethan, Tetraglycidylbisaminomethylcyclohexan oder Mischungen davon zum Einsatz kommen.

Bevorzugt werden als tetrafunktionale Epoxymonomere Pentaerythritoltetraglycidylether, (CAS Nr. 3126-63-4), Dipentaerythritoltetraglycidylether, Sorbitoltetraglycidylether oder Mischungen davon, besonders bevorzugt Pentaerythritoltetraglycidylether, (CAS Nr. 3126-63-4), Dipentaerythritoltetraglycidylether oder Mischungen davon eingesetzt.

Umfasst die strahlungshärtbare Komponente der 3D-Drucktinte monofunktionale Vinylmonomere so können diese beispielweise Ethylenglycolvinylether (CAS Nr. 764-48-7), Di(ethylenglycol)vinylether (CAS Nr. 929-37-3), 1-Vinylcyclohexanol (CAS Nr. 1940-19-8), Vinylacetat (CAS Nr. 108-05-4), Vinylchlorid (CAS Nr. 75-01-4), Ethylvinylketon (CAS Nr. 1629-58-9), Butylvinylether (CAS Nr. 111-34-2), 1,4-Butandiolvinylether (CAS Nr. 17832-28-9), Vinylacrylat (CAS Nr. 2177-18-6), Vinylmethacrylat (CAS Nr. 4245-37-8), Isobutylvinylether (CAS Nr. 109-53-5), Vinylpivalat (CAS Nr. 3377-92-2), Vinylbenzoat (CAS Nr. 769-78-8), Vinylvalerat (CAS Nr. 5873-43-8), 2-Ethylhexylvinylether (CAS Nr. 103-44-6), Phenylvinylether (CAS Nr. 766-94-9), tert-Butylvinylether (CAS Nr. 926-02-3), Cyclohexylvinylether (CAS Nr. 2182-55-0), Dodecylvinylether (CAS Nr. 765-14-0), Ethylvinylether (CAS Nr. 109-92-2), Propylvinylether (CAS Nr. 764-47-6), 1,4-Cyclohexandimethanolvinylether (CAS Nr. 114651-37-5) oder Mischungen hiervon umfassen.

Bevorzugt werden als monofunktionale Vinylmonomere Ethylenglycolvinylether, Di(ethylenglycol)vinylether, Ethylvinylketon, Vinylacetat, Phenylvinylether, Cyclohexylvinylether oder Mischungen hiervon, besonders bevorzugt Ethylvinylketon, Vinylacetat, Ethylenglycolvinylether oder Mischungen hiervon eingesetzt.

Als difunktionale Vinylmonomere können beispielsweise Di(ethylenglycol)divinylether (CAS Nr. 764-99-8), Tri(ethylenglycol)divinylether (CAS Nr. 765-12-8), Tetra(ethylenglycol)divinylether (CAS Nr. 83416-06-2), Poly(ethylenglycol)divinylether (CAS Nr. 50856-26-3), Tri(ethylenglycol)divinylether (CAS Nr. 765-12-8), Divinylbenzol (CAS Nr. 1321-74-0), 1,4-Butandioldivinylether (CAS Nr. 3891-33-6), 1,6-Hexandioldivinylether (CAS Nr. 19763-13-4), 1,4-Cyclohexandimethanoldivinylether (CAS Nr. 17351-75-6), 1,4-Pentadien-3-ol (CAS Nr. 922-65-6) oder Mischungen hiervon zum Einsatz kommen.

Bevorzugt werden als difunktionale Vinylmonomere Di(ethylenglycol)divinylether, 1,4-Cyclohexandimethanoldivinylether, Poly(ethylenglycol)divinylether, Divinylbenzol oder Mischungen hiervon, besonders bevorzugt 1,4-Cyclohexandimethanoldivinylether, Divinylbenzol, Di(ethylenglycol)divinylether oder Mischungen hiervon als strahlungshärtbare Komponente in der 3D-Drucktinte eingesetzt.

Als trifunktionale bzw. tetrafunktionale Vinylmonomere können beispielsweise 1,3,5-Trivinylbenzol, 1,2,4-Trivinylcyclohexan (CAS Nr. 2855-27-8), 1,3,5-Trivinyl-1,3,5-triazinan-2,4,6-trion, 1,3,5-Trivinyl-1,3,5-trimethylcylcotrisiloxan (CAS Nr. 3901-77-7), 2,4,6-Trimethyl-2,4,6-trivinylcyclotrisilazan (CAS Nr. 5505-72-6), 2,4,6-Trivinylcyclotriboroxanpyridin-Komplex (CAS Nr. 442850-89-7), Tetravinylsilan (CAS Nr. 1112-55-6), 2,4,6,8-Tetramethyl-2,4,6,8-tetravinylcyclotetrasiloxan (CAS Nr. 2554-06-5) oder Mischungen davon eingesetzt werden.

Bevorzugt werden als trifunktionale bzw. tetrafunktionale Vinylmonomere 1,3,5-Trivinylbenzol, 1,2,4-Trivinylcyclohexan, Tetravinylsilan oder Mischungen hiervon, besonders bevorzugt 1,3,5-Trivinylbenzol, 1,2,4-Trivinylcyclohexan oder Mischungen hiervon eingesetzt.

Weiterhin kann die 3D-Drucktinte monofunktionale Allylmonomere, wie beispielsweise Allylacetat (CAS Nr. 591-87-7), Allylacetoacetat (CAS Nr. 1118-84-9), Allylalkohol (CAS Nr. 107-18-6), Allylbenzylether (CAS Nr. 14593-43-2), Allylbutylether (CAS Nr. 3739-64-8), Allylbutyrat (CAS Nr. 2051-78-7), Allylethylether (CAS Nr. 557-31-3), Ethylenglycolallylether (CAS Nr. 111-45-5), Allylphenylether (CAS Nr. 1746-13-0), Trimethylolpropanallylether (CAS Nr. 682-11-1), 2-Allyloxyethanol (CAS Nr. 111-45-5), 3-Allyloxy-1,2-propandiol (CAS Nr. 123-34-2) oder Mischungen hiervon umfassen.

Bevorzugt werden als monofunktionale Allylmonomere Allylacetat, Allylalkohol, Ethylenglycolallylether, Allyloxyethanol oder Mischungen hiervon, besonders bevorzugt Allylacetat, Allylalkohol, Ethylenglycolallylether oder Mischungen hiervon umfassen.

Als difunktionale Allylmonomere können beispielsweise Allylether (CAS Nr. 557-40-4), 2,2'-Diallylbisphenol A (CAS Nr. 1745-89-7), 2,2'-Diallylbisphenol A diacetatether (CAS Nr. 1071466-61-9), Trimethylolpropandiallylether (CAS Nr. 682-09-7), Diallylcarbonat (CAS Nr. 15022-08-9), Diallylmaleat (CAS Nr. 999-21-3), Diallylsuccinat (CAS Nr. 925-16-6), Diallylphthalat (CAS Nr. 131-17-9), Di(ethylenglycol)bis(allylcarbonat) (CAS Nr. 142-22-3) oder Mischungen davon eingesetzt werden.

Bevorzugt werden als difunktionale Allylmonomere Allylether, 2,2'-Diallylbisphenol A, Diallylcarbonat, Diallylsuccinat, Di(ethylenglycol)bis(allylcarbonat), Diallylmaleat oder Mischungen davon, besonders bevorzugt Allylether, 2,2'-Diallylbisphenol A, Diallylcarbonat, Diethylenglykoldiallylcarbonat oder Mischungen davon eingesetzt.

Als trifunktionale bzw. tetrafunktionale Allylmonomere können beispielsweise 2,4,6-Triallyloxy-1,3,5-triazin (CAS Nr. 101-37-1), 1,3,5-Triallyl-1,3,5-triazin-2,4,6(1H,3H,5H)-trion (CAS Nr. 1025-15-6), 3-(N,N',N'-Triallylhydrazin)propionsäure, Pentaerythritolallylether (CAS Nr. 91648-24-7), 1,1,2,2-Tetraallyloxyethan (CAS Nr. 16646-44-9), Tetraallylpyromellitat (CAS Nr. 13360-98-0) oder Mischungen davon eingesetzt werden.

Bevorzugt werden als trifunktionale bzw. tetrafunktionale Allylmonomere 2,4,6-Triallyloxy-1,3,5-triazin, Pentaerythritolallylether, 1,3,5-Triallyl-1,3,5-triazin-2,4,6(1H,3H,5H)-trion oder Mischungen davon, besonders bevorzugt 2,4,6-Triallyloxy-1,3,5-triazin, Pentaerythritolallylether oder Mischungen davon eingesetzt.

Erfindungsgemäß erfolgt die Auswahl an zu verwendenden strahlungshärtenden Komponenten so, dass ausreichend vernetzbare, aber dennoch schnell aushärtende Monomermischungen erhalten werden können.

Der Gesamtanteil an wenigstens einer strahlungshärtbaren Komponente in der 3D-Drucktinte liegt bevorzugt in einem Bereich von 11,0 Gew.-% bis 99,5 Gew.-%, weiter bevorzugt in einem Bereich von 17 Gew.-% bis 99 Gew.-%, besonders bevorzugt in einem Bereich von 31 Gew.-% bis 98,5 Gew.-% und ganz besonders bevorzugt in einem Bereich von 40 Gew.-% bis 98 Gew.-%, jeweils bezogen auf das Gesamtgewicht der 3D-Drucktinte. Vorstehend aufgeführte Bereiche gelten sowohl für die Verwendung von ausschließlich monofunktionalen, ausschließlich difunktionalen, ausschließlich trifunktionalen, ausschließlich tetrafunktionalen strahlungshärtbaren Komponenten als auch für die Verwendung von Mischungen strahlungshärtbarer Komponenten ausgewählt aus der Gruppe bestehend aus monofunktionalen, difunktionalen, trifunktionalen und tetrafunktionalen strahlungshärtbaren Komponenten. Vorstehend aufgeführte Bereiche gelten weiterhin sowohl für die Verwendung von ausschließlich (Meth)acrylatmonomeren, Epoxymonomeren, Vinyl- oder Allylmonomeren als auch für die Verwendung von Mischungen hiervon. Beispielsweise kann wenigstens ein monofunktionales (Meth)acrylatmonomer mit wenigstens einem trifunktionalen Epoxymonomer in Mischung vorliegen.

Der Gesamtanteil an wenigstens einer Art an monofunktionalem (Meth)acrylatmonomer Epoxymonomer, Vinyl- oder Allylmonomer liegt in der 3D-Drucktinte bevorzugt in einem Bereich von 0,0 Gew.-% bis 60,0 Gew.-%, weiter bevorzugt in einem Bereich von 0,3 Gew.-% bis 51,0 Gew.-%, besonders bevorzugt in einem Bereich von 1,2 Gew.-% bis 44,0 Gew.-% und ganz besonders bevorzugt in einem Bereich von 1,8 Gew.-% bis 35,0 Gew.-%, jeweils bezogen auf das Gesamtgewicht der 3D-Drucktinte. Vorstehend genannte Bereiche gelten sowohl für die Verwendung einer Art an monofunktionalem (Meth)acrylatmonomer, Epoxymonomer, Vinyl- oder Allylmonomer als auch für die Verwendung einer Mischung voneinander verschiedener monofunktionaler (Meth)acrylatmonomere, Epoxymonomere, Vinyl- oder Allylmonomere. Beispielsweise kann wenigstens eine Art monofunktionales (Meth)acrylatmonomer mit wenigstens einer Art monofunktionalem Allylmonomer oder wenigstens eine Art monofunktionales (Meth)acrylatmonomer mit wenigstens einer hiervon verschiedenen Art an monofunktionalem (Meth)acrylatmonomer jeweils in Mischung vorliegen.

Bei einer bevorzugten Ausführungsform umfasst die 3D-Drucktinte kein monofunktionales (Meth)acrylatmonomer, Epoxymonomer, Vinyl- oder Allylmonomer.

Der Gesamtanteil an wenigstens einer Art an difunktionalem (Meth)acrylatmonomer, Epoxymonomer, Vinyl- oder Allylmonomer liegt in der 3D-Drucktinte bevorzugt in einem Bereich von 32,0 Gew.-% bis 99,0 Gew.-%, weiter bevorzugt in einem Bereich von 39,0 Gew.-% bis 97,0 Gew.-%, besonders bevorzugt in einem Bereich von 47,0 Gew.-% bis 95,0 Gew.-% und ganz besonders bevorzugt in einem Bereich von 56,0 Gew.-% bis 93,0 Gew.-%, jeweils bezogen auf das Gesamtgewicht der 3D-Drucktinte. Vorstehend genannte Bereiche gelten sowohl für die Verwendung einer Art an difunktionalem (Meth)acrylatmonomer, Epoxymonomer, Vinyl- oder Allylmonomer als auch für die Verwendung einer Mischung voneinander verschiedener difunktionaler (Meth)acrylatmonomere, Epoxymonomere, Vinyl- oder Allylmonomere. Beispielsweise kann wenigstens eine Art an difunktionalem (Meth)acrylatmonomer mit wenigstens einer Art an difunktionalem Epoxymonomer in Mischung vorliegen oder es kann sich um eine Mischung aus zwei voneinander verschiedenen Arten monofunktionaler (Meth)acrylatmonomere handeln.

Der Gesamtanteil an wenigstens einer Art an trifunktionalem (Meth)acrylatmonomer, Epoxymonomer, Vinyl- oder Allylmonomer liegt in der 3D-Drucktinte bevorzugt in einem Bereich von 1,0 Gew.-% bis 51,0 Gew.-%, weiter bevorzugt in einem Bereich von 2,0 Gew.-% bis 43,0 Gew.-%, besonders bevorzugt in einem Bereich von 3,0 Gew.-% bis 36,0 Gew.-% und ganz besonders bevorzugt in einem Bereich von 4,0 Gew.-% bis 31,0 Gew.-%, jeweils bezogen auf das Gesamtgewicht der 3D-Drucktinte. Vorstehend genannte Bereiche gelten sowohl für die Verwendung einer Art an trifunktionalem (Meth)acrylatmonomer, Epoxymonomer, Vinyl- oder Allylmonomer als auch für die Verwendung einer Mischung voneinander verschiedener trifunktionaler (Meth)acrylatmonomere, Epoxymonomere, Vinyl- oder Allylmonomere. Beispielsweise kann wenigstens eine Art an trifunktionalem (Meth)acrylatmonomer mit wenigstens einer Art an trifunktionalem Vinylmonomer oder wenigstens eine Art an trifunktionalem (Meth)acrylatmonomer mit wenigstens einer davon verschiedenen Art an trifunktionalem (Meth)acrylatmonomer jeweils in Mischung vorliegen.

Der Gesamtanteil an wenigstens einer Art an tetrafunktionalem (Meth)acrylatmonomer, Epoxymonomer, Vinyl- oder Allylmonomer liegt in der 3D-Drucktinte bevorzugt in einem Bereich von 0 Gew.-% bis 16 Gew.-%, weiter bevorzugt in einem Bereich von 0 bis 13 Gew.-%, besonders bevorzugt in einem Bereich von 0,1 Gew.-% bis 9 Gew.-% und ganz besonders bevorzugt in einem Bereich von 0,4 Gew-% bis 4 Gew.-%, jeweils bezogen auf das Gesamtgewicht der 3D-Drucktinte. Vorstehend genannte Bereiche gelten sowohl für die Verwendung einer Art an tetrafunktionalem (Meth)acrylatmonomer, Epoxymonomer, Vinyl- oder Allylmonomer als auch für die Verwendung einer Mischung voneinander verschiedener tetrafunktionaler (Meth)acrylatmonomere, Epoxymonomere, Vinyl- oder Allylmonomere. Beispielsweise kann wenigstens eine Art an tetrafunktionalem (Meth)acrylatmonomer mit wenigstens einer weiteren, hiervon verschiedenen Art an tetrafunktionalem (Meth)acrylatmonomer in Mischung vorliegen oder es kann sich um eine Mischung an wenigstens einer Art an tetrafunktionalem (Meth)acrylatmonomer mit wenigstens einer Art an tetrafunktionalem Allylmonomer handeln.

Bei einer bevorzugten Ausführungsform umfasst die 3D-Drucktinte wenigstens eine monofunktionale strahlungshärtbare Komponente und wenigstens eine difunktionale strahlungshärtbare Komponente bevorzugt im Gewichtsverhältnis 1 : 1, besonders bevorzugt im Gewichtsverhältnis 1 : 5 und ganz besonders bevorzugt im Gewichtsverhältnis 1 : 10.

Bei einer weiteren Ausführungsform umfasst die 3D-Drucktinte wenigstens eine monofunktionale strahlungshärtbare Komponente und wenigstens eine trifunktionale strahlungshärtbare Komponente bevorzugt im Gewichtsverhältnis 1 : 5, besonders bevorzugt im Gewichtsverhältnis 1 : 3 und ganz besonders bevorzugt im Gewichtsverhältnis 1 : 1.

Bei einer weiteren Ausführungsform umfasst die 3D-Drucktinte wenigstens eine difunktionale strahlungshärtbare Komponente und wenigstens eine trifunktionale strahlungshärtbare Komponente im Gewichtsverhältnis 1 : 1, besonders bevorzugt im Gewichtsverhältnis 5 : 1 und ganz besonders bevorzugt im Gewichtsverhältnis 8 : 1.

Bei einer weiteren Ausführungsform umfasst die 3D-Drucktinte wenigstens eine difunktionale strahlungshärtbare Komponente und wenigstens eine tetrafunktionale strahlungshärtbare Komponente im Gewichtsverhältnis 5 : 1, besonders bevorzugt im Gewichtsverhältnis 10 : 1 und ganz besonders bevorzugt im Gewichtsverhältnis 20 : 1.

Bei einer weiteren Ausführungsform umfasst die 3D-Drucktinte wenigstens eine monofunktionale strahlungshärtbare Komponente und wenigstens eine difunktionale strahlungshärtbare Komponente und wenigstens eine trifunktionale strahlungshärtbare Komponente im Gewichtsverhältnis 1 : 5 : 1, besonders bevorzugt im Gewichtsverhältnis 2 : 13 : 0,5 und ganz besonders bevorzugt im Gewichtsverhältnis 2: 18 : 0,3.

Bei einer besonders bevorzugten Ausführungsform umfasst die 3D-Drucktinte als strahlungshärtbare Komponente wenigstens eine Art an difunktionalem (Meth)acrylatmonomer und wenigstens eine Art an trifunktionalem (Meth)acrylatmonomer, wobei die Viskosität der erfindungsgemäßen 3D-Drucktinte bei ≤ 50 mPa·s, bevorzugt in einem Bereich von 5 mPa·s bis 33 mPa·s, weiter bevorzugt in einem Bereich von 7 mPa·s bis 27 mPa·s, besonders bevorzugt in einem Bereich von 9 mPa·s bis 23 mPa·s und ganz besonders bevorzugt in einem Bereich von 11 mPa·s bis 21 mPa·s liegt.

Bei einer weiteren bevorzugten Ausführungsform umfasst die 3D-Drucktinte als strahlungshärtbare Komponente wenigstens eine Art an difunktionalem Epoxymonomer und wenigstens eine Art an trifunktionalem Epoxymonomer, wobei die Viskosität der erfindungsgemäßen 3D-Drucktinte bei ≤ 53 mPa·s, bevorzugt in einem Bereich von 4 mPa·s bis 31 mPa·s, weiter bevorzugt in einem Bereich von 6 mPa·s bis 28 mPa·s, besonders bevorzugt in einem Bereich von 9 mPa·s bis 22 mPa·s und ganz besonders bevorzugt in einem Bereich von 10 mPa·s bis 20 mPa·s liegt.

Bei einer Ausführungsform umfasst die 3D-Drucktinte wenigstens einen UV-Initiator. Die erfindungsgemäße 3D-Drucktinte kann beispielsweise Benzophenon (CAS Nr. 119-61-9), 2-Methylbenzophenon (CAS Nr. 131-58-8), 4-Methylbenzophenon (CAS Nr. 134-84-9), 4,4'-Bis(dimethylamino)benzophenon (CAS Nr. 90-94-8), Benzoin (CAS Nr. 119-53-9), Benzoinmethylether (CAS Nr. 3524-62-7), Benzoinisopropylether (CAS Nr. 6652-28-4), 2,2-Dimethoxy-1,2-diphenylethan-1-on (CAS Nr. 24650-42-8), Phenylbis(2,4,6-trimethylbenzoyl)phosphinoxid (CAS Nr. 162881-26-7), 2,4,6-Trimethylbenzoylphenylphosphinsäureethylester (CAS Nr. 84434-11-7), 2-Methyl-1-[4-(methylthio)phenyl]-2-(4-morpholinyl)-1-propanon (CAS Nr. 71868-10-5), 2-Hydroxy-2-methyl-1-phenyl-1-propanon (CAS Nr. 7473-98-5), 2-(Dimethylamino)-1-(4-(4-morpholinyl)phenyl)-2-(phenylmethyl)-1-butanon (CAS Nr. 119313-12-1), Diphenyl(2,4,6-trimethylbenzoyl)phosphinoxid (CAS Nr. 75980-60-8), Triarylsulfoniumhexafluorophosphat-Salze (CAS Nr. 109037-77-6), Triarylsulfoniumhexafluoroantimonat-Salze (CAS Nr. 109037-75-4) oder Mischungen hiervon als UV-Initiator umfassen. Bevorzugt umfasst die erfindungsgemäße 3D-Drucktinte Benzophenon, 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid, Triarylsulfoniumhexafluorophosphat-Salze oder Mischungen hiervon, besonders bevorzugt 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid oder Mischungen hiervon als UV-Initiator.

Die 3D-Drucktinte umfasst den wenigstens einen UV-Initiator in einem Gesamtanteil aus einem Bereich von bevorzugt 0,01 Gew.-% bis 3,7 Gew.-%, besonders bevorzugt aus einem Bereich von 0,1 Gew.-% bis 2,1 Gew.-% und ganz besonders bevorzugt aus einem Bereich von 0,3 Gew.-% bis 1,7 Gew.-%, jeweils bezogen auf das Gesamtgewicht der 3D-Drucktinte.

Bei einer Ausführungsform kann der wenigstens eine UV-Initiator zusammen mit einem Co-Initiator eingesetzt werden. Co-Initiatoren werden vorzugsweise immer dann zugesetzt, wenn der UV-Initiator ein zweites Molekül zur Bildung eines im UV-Bereich aktiven Radikals benötigt. Beispielsweise benötigt Benzophenon ein zweites Molekül, wie beispielsweise ein Amin, z.B. Triethylamin, Methyldiethanolamin oder Triethanolamin, um nach Absorption von UV-Licht ein Radikal zu erzeugen.

Das optional wenigstens eine Lösungsmittel der 3D-Drucktinte kann aus der Gruppe bestehend aus Alkoholen, Ketonen, Estern, Ethern, Thioethern, Amiden, Kohlenwasserstoffen, Aminen und Mischungen hiervon, ausgewählt werden. Vorzugsweise wird das optional wenigstens eine Lösungsmittel aus der Gruppe, bestehend aus Alkoholen, Ketonen, Estern und Mischungen hiervon, ausgewählt. Ein Lösungsmittel kann im Sinne dieser Erfindung einerseits eine Art von Lösungsmittel, andererseits ein Lösungsmittelgemisch sein.

Beispiele für als Lösungsmittel einsetzbare Alkohole sind Methanol, Ethanol, Propanol, Isopropanol, Butanol, Pentanol, Hexanol oder Mischungen hiervon.

Beispiele für als Ketone einsetzbare Lösungsmittel sind Aceton, Methylethylketon, Cyclohexanon, Diisobutylketon, Methylpropylketon, Diacetonalkohol oder Mischungen hiervon.

Beispiele für Ester als einsetzbare Lösungsmittel sind Methylacetat, Ethylacetat, 1-Methoxy-2-propylacetat, n-Propylacetat, i-Propylacetat, Ethoxypropylacetat, Butylacetat, Methylpropionat, Ethylpropionat, Glykoletheracetate, Butylglykolacetat, Propylenglykoldiacetat, Ethyllactat oder Mischungen hiervon.

Beispiele für Ether als einsetzbare Lösungsmittel sind Diethylether, Dipropylether, Tetrahydrofuran, Ethylenglykolethylether, Ethylenglycolmethylether, Triethylenglykolbutylether, Tetraethylenglykolmethylether, Tetraethylenglykolbutylether, Dipropylenglykoldimethylether, Propylenglykolbutylether, 1-Methoxy-2-propanol, 3-Methoxy-3-methyl-1-butanol oder Mischungen hiervon.

Beispiele für Amide als einsetzbare Lösungsmittel sind Dimethylacetamid, Dimethylformamid, Formamid, N-Methylformamid, N-Methylpyrrolidon und 2-Pyrrolidon.

Beispiele für Kohlenwasserstoffe als einsetzbare Lösungsmittel sind Terpene, wie Pinen, Limonen oder Terpinolen, aliphatische Kohlenwasserstoffe, wie Hexan, Heptan, Octan oder Testbenzin, aromatische Kohlenwasserstoffe, wie Toluol oder Xylol.

Bei einer Ausführungsform wird das optional wenigstens eine Lösungsmittel der 3D-Drucktinte aus der Gruppe, bestehend aus Isopropanol, Ethanol, Butanol, Diisobutylketon, Butylglykol, Butylglykolacetat, Propylenglykoldiacetat, Dipropylenglykoldimethylether, Ethyllactat, Ethoxypropylacetat und Mischungen hiervon, ausgewählt.

Bei einer Ausführungsform weist das optional wenigstens eine Lösungsmittel einen Flammpunkt von mindestens 61°C auf.

Bei einer bevorzugten Ausführungsform liegt der Anteil des optional vorhandenen, wenigstens einen Lösungsmittel in der 3D-Drucktinte in einem Bereich von 0 Gew.-% bis 10 Gew.-%, bevorzugt in einem Bereich von 0 Gew.-% bis 7,7 Gew.-%, besonders bevorzugt in einem Bereich von 0,1 Gew.-% bis 6,3 Gew.-% und ganz besonders bevorzugt in einem Bereich von 0,1 Gew.-% bis 5,2 Gew.-%, jeweils bezogen auf das Gesamtgewicht der 3D-Drucktinte. Bei einer besonders bevorzugten Ausführungsform umfasst die 3D-Drucktinte kein Lösungsmittel.

Die 3D-Drucktinte weist bevorzugt eine Oberflächenspannung aus einem Bereich von 10 mN/m bis 80 mN/m, besonders bevorzugt aus einem Bereich von 15 mN/m bis 40 mN/m und ganz bevorzugt aus einem Bereich von 18 mN/m bis 35 mN/m auf. Liegt die Oberflächenspannung unter 10 mN/m, werden die Tropfen am Druckkopf zu groß für die gewünschte Anwendung. Liegt die Oberflächenspannung über 80 mN/m, bilden sich keine definierten Tropfen der Drucktinte am Drucckopf. Die Oberflächenspannung wird vorzugsweise bei einer Temperatur von 25°C mit dem Gerät DSA 100 der Firma Krüss und der Pendant-Drop-Methode bestimmt.

Die Viskosität der 3D-Drucktinte liegt bevorzugt in einem Bereich von 4 mPa·s bis 56 mPa·s, weiter bevorzugt in einem Bereich von 7 mPa·s bis 45 mPa·s, besonders bevorzugt in einem Bereich von 9 mPa·s bis 34 mPa·s, und ganz besonders bevorzugt in einem Bereich von 10 mPa·s bis 22 mPa·s. Die Viskosität wird vorzugsweise mit einem Rheometer C-VOR 150 der Fa. Malvern mit der Vorgabe einer Winkelgeschwindigkeit von 5,2 rad/sec bei 25°C gemessen.

Die 3D-Drucktinte kann wenigstens ein Farbmittel umfassen. Als Farbmittel können im umgebenden Medium lösliche oder dispergierbare, bunte oder unbunte Farbstoffe zum Einsatz kommen. In Abhängigkeit vom zu erzielenden Effekt und/oder von dem zu erzielenden optischen Eindruck können als Farbmittel alternativ oder zusätzlich zu den Farbstoffen auch im umgebenden Medium unlösliche Pigmente eingesetzt werden. Als Pigmente werden vorzugsweise Effektpigmente, wie Metalleffektpigmente oder Perlglanzpigmente, organische und/oder anorganische Pigmente, verwendet.

Bevorzugt werden als Farbstoffe, organische oder anorganische Pigmente, diejenigen in der 3D-Drucktinte eingesetzt, welche auch in Textilien und/oder Lebensmitteln zugelassen sind.

Geeignete organische Pigmente für den Einsatz in der Drucktinte umfassen beispielsweise Nitroso-, Nitro-, Azo-, Xanthen-, Chinolin-, Anthrachinon-, Phthalocyanin-, Metallkomplex-, Isoindolinon-, Isoindolin-, Chinacridon-, Perinon-, Perylen-, Diketopyrrolopyrrol-, Thioindigo-, Dioxazin-, Triphenylmethan- und Chinophthalonverbindungen.

Die in der 3D-Drucktinte einsetzbaren Farbstoffe oder organischen Pigmente können beispielsweise C.I. Disperse Yellow 5, C.I. Disperse Yellow 13, C.I. Disperse Yellow 33, C.I. Disperse Yellow 42, C.I. Disperse Yellow 51, C.I. Disperse Yellow 54, C.I. Disperse Yellow 64, C.I. Disperse Yellow 71, C.I. Disperse Yellow 86, C.I. Disperse Yellow 114, C.I. Disperse Yellow 201, C.I. Disperse Yellow 211, C.I. Disperse Orange 30, C.I. Disperse Orange 73, C.I. Disperse Red 4, C.I. Disperse Red 11, C.I. Disperse Red 15, C.I. Disperse Red 55, C.I. Disperse Red 58, C.I. Disperse Red 60, C.I. Disperse Red 73, C.I. Disperse Red 86, C.I. Disperse Red 91, C.I. Disperse Red 92, C.I. Disperse Red 127, C.I. Disperse Red 152, C.I. Disperse Red 189, C.I. Disperse Red 229, C.I. Disperse Red 279, C.I. Disperse Red 302, C.I. Disperse Red 302:1, C.I. Disperse Red 323, C.I. Disperse Blue 27, C.I. Disperse Blue 54, C.I. Disperse Blue 56, C.I. Disperse Blue 73, C.I. Disperse Blue 280, C.I. Disperse Violet 26, C.I. Disperse Violet 33, C.I. Solvent Yellow 179, C.I. Solvent Violet 36, C.I. Pigment Blue 15, C.I. Pigment Blue 80, C.I. Pigment Green 7, C.I. Pigment Orange 36, C.I. Pigment Orange 36, C.I. Pigment Yellow 13, C.I. Pigment Violet 23, C.I. Pigment Violet 37, C.I. Pigment Black 1, C.I. Pigment Black 6, C.I. Pigment Black 7 oder Mischungen davon umfassen.

Bevorzugt werden die in der 3D-Drucktinte C.I. Disperse Yellow 42, C.I. Disperse Yellow 201, C.I. Solvent Yellow 179, C.I. Disperse Orange 73, C.I. Disperse Red 279, C.I. Disperse Red 302:1, C.I. Disperse Blue 56, C.I. Solvent Violet 36 oder Mischungen davon als Farbstoffe oder organische Pigmente eingesetzt.

Der Gesamtanteil an Farbmittel liegt in der 3D-Drucktinte bevorzugt in einem Bereich von 0,0 Gew.-% bis 66,0 Gew.-%, weiter bevorzugt in einem Bereich von 0,01 Gew.-% bis 53,1 Gew.-%, besonders bevorzugt in einem Bereich von 0,1 Gew.-% bis 42,3 Gew.-% und ganz besonders bevorzugt in einem Bereich von 0,11 Gew.-% bis 27,7 Gew.-%, jeweils bezogen auf das Gesamtgewicht der 3D-Drucktinte. Der Gesamtanteil an Farbmittel umfasst den Anteil aller in der 3D-Drucktinte vorliegenden Farbmittel, unabhängig davon, ob es sich um Farbstoffe, Pigmente, Mischungen davon, Mischungen unterschiedlicher Farbstoffe, Mischungen unterschiedlicher Pigmente etc. handelt.

Der Gesamtanteil an Farbmittel liegt in dem erfindungsgemäßen Brillenglas bevorzugt in einem Bereich von 0,0 Gew.-% bis 8,0 Gew.-%, weiter bevorzugt in einem Bereich von 0,01 Gew.-% bis 8,0 Gew.-%, weiter bevorzugt in einem Bereich von 0,0 Gew.-% bis 6,0 Gew.-%, besonders bevorzugt in einem Bereich von 0,01 Gew.-% bis 4,0 Gew.-% und ganz besonders bevorzugt in einem Bereich von 0,05 Gew.-% bis 2,0 Gew.-%, jeweils bezogen auf das Gesamtgewicht des Brillenglases. Der Gesamtanteil an Farbmittel umfasst den Anteil aller Farbmittel im Brillenglas, unabhängig davon, ob es sich um Farbstoffe oder Pigmente, Mischungen unterschiedlicher Farbstoffe oder Mischungen unterschiedlicher Pigmente, Mischungen aus Farbstoffen und Pigmenten etc. handelt.

Die 3D-Drucktinte wird vorzugsweise durch Mischen aller Komponenten unter Rühren hergestellt, wobei das wenigstens eine Farbmittel, sofern vorhanden, vorgelegt und zunächst mit einer geringen Menge an strahlungshärtbarer Komponente und/oder Lösungsmitel gelöst oder dispergiert wird und anschließend die restlichen Komponenten zugefügt werden.

Bei einer Ausführungsform wird das erfindungsgemäße Brillenglas mittels einer Drucktinte umfassend wenigstens ein Farbmittel und einer 3D-Drucktinte ohne Farbmittel einheitenweise aufgebaut. Mit "einheitenweise" ist die Anordnung wenigstens eines Volumenelements, vorzugsweise einer Vielzahl von Volumenelementen der 3D-Drucktinte gemeint, wobei die erste einheitenweise Anordnung wenigstens eines Volumenelements auf dem vorbeschichteten Substrat erfolgt. Vorzugsweise erfolgt die einheitenweise Anordnung wenigstens eines Volumenelements lagenweise. Die Verbindung der Volumenelemente erfolgt vorzugsweise mittels UV-Licht. Hierbei kann die 3D-Drucktinte, welche das Farbmittel umfasst, wenigstens eine strahlungshärtbare Komponente umfassen, welche verschieden von der strahlungshärtbaren Komponente der 3D-Drucktinte ohne Farbmittel ist. Bevorzugt wird die wenigstens eine strahlungshärtbare Komponente der 3D-Drucktinte umfassend wenigstens ein Farbmittel so ausgewählt, dass die wenigstens eine strahlungshärtbare Komponente kompatibel sowohl zum wenigstens einen Farbmittel als auch zur wenigstens einen strahlungshärtbaren Komponente der 3D-Drucktinte ohne Farbmittel ist. Weiterhin bevorzugt verhindert die wenigstens eine strahlungshärtbare Komponente der 3D-Drucktinte umfassend wenigstens ein Farbmittel eine Diffusion des Farbmittels in die 3D-Drucktinte ohne Farbmittel. Auf diese Weise können sehr definierte farb- und/oder effektgebende Volumenelemente innerhalb des Brillenglases angeordnet werden.

Bei einer weiteren Ausführungsform der Erfindung wird das Brillenglas entsprechend der Form einer Brillenfassung gedruckt, so dass das Formranden in die Brillenfassung entfällt. Weiterhin kann bei dieser Ausführungsform die für die Befestigung in einer Brillenfassung vorgesehene Nut bzw. Rille, z.B. für Nylorfassungen, oder spezielle Facettenformen, wie z.B. Flach- oder Schmuckfacetten, beim Drucken des Brillenglases bereits berücksichtigt werden. Aussparungen oder Bohrungen, wie sie beispielsweise für randlose Brillen benötigt werden, können bei dieser Ausführungsform materialfrei bleiben, so dass auch hier nachfolgende Bearbeitungsschritte entfallen können. Bei dieser Ausführungsform wird, bei Vorliegen der Formdaten der Brillenfassung, die wenigstens eine farb- und/oder effektgebende Lage nur an diejenige Stellen des Brillenglases gedruckt, an welchen eine Einfärbung und/oder ein anderer Effekt im Brillenglas innerhalb einer Brillenfassung erwünscht ist.

Die 3D-Drucktinte kann optional wenigstens ein Additiv umfassen. Der 3D-Drucktinte können beispielsweise Dispergiermittel, Antiabsetzmittel, Netzmittel, einschließlich Antikrater- oder Verlaufsadditiven, Biozide, UV-Absorber oder Mischungen hiervon zugesetzt werden.

Dispergiermittel helfen eine homogene Verteilung aller festen Bestandteile in der Drucktinte 3D-Drucktinte zu erreichen. Insbesondere wird eine mögliche Agglomeration der Pigmente vermieden. Als Dispergiermittel können beispielsweise Solsperse 20000, Solsperse 32500, jeweils Fa. Avecia K.K., Disperbyk-102, Disperbyk-106, Disperbyk-111, Disperbyk-161, Disperbyk-162, Disperbyk-163, Disperbyk-164, Disperbyk-166, Disperbyk-180, Disperbyk-190, Disperbyk-191 oder Disperbyk-192, jeweils Fa. Byk-Chemie GmbH, Verwendung finden.

Antiabsetzmittel sollen das Absetzen, insbesondere von Pigmenten in der 3D-Drucktinte verhindern. Beispiele für einsetzbare Antiabsetzmittel sind Byk-405 (Fa. Byk-Chemie GmbH) in Verbindung mit pyrogenem Siliziumdioxid, modifizierte Harnstoffe wie Byk-410, Byk-411 oder Wachse wie Ceramat 250, Cerafak103, Cerafak 106 oder Ceratix 8461, jeweils Fa. Byk-Chemie GmbH.

Netzmittel sind wichtig für die Funktion des Druckkopfs, da auch interne Strukturen, wie beispielsweise Kanäle, Filter, Düsenvorkammern etc. benetzt werden. Beispiele geeigneter Netzmittel umfassen Fettsäurealkylester, Acetylenderivate, fluorierte Ester oder fluorierte Polymere.

Biozide können 3D-Drucktinten zugesetzt werden, um ein Wachstum von Mikroorganismen zu verhindern. Als Biozid können beispielsweise Polyhexamethylenbiguanide, Isothiazolone, Isothiazolinone, wie z.B. 5-Chloro-2-methyl-4-isothiazolin-3-on, 2-Methyl-4-isothiazolin-3-on oder Mischungen hiervon verwendet werden.

Die Auswahl des geeigneten UV-Absorbers, der kompatibel mit den weiteren Komponenten der 3D-Drucktinte und dem 3D-Druckverfahren sein muss, sowie die Optimierung der Konzentration zur Erzielung einer gewünschten UV-Absorptionseigenschaft kann z.B. mit Hilfe von Simulationsprogrammen unter Berücksichtigung geeigneter Werkstoffdatenbanken bestimmt werden.

Der DE 69534779 T2 entnimmt man eine Auswahl geeigneter UV-Absorber für Brillengläser, welche auch in der 3D-Drucktinte eingesetzt werden können. Demzufolge kann der UV-Absorber beispielsweise 2(2'-Hydroxy-5'-methyl-phenyl)benzotriazol, 2-Hydroxy-4-n-acetoxybenzophenon, 2(2'Hydroxy-5-5-octylphenyl)benzotriazol, 2(2'-Hydroxy-3',6'(1,1-dimethylbenzylphenyl)benzotriazol, 2(2'-Hydroxy-3',5'-di-t-amylphenyl)benzotriazol, bis[2-Hydroxy-5-methyl-3-(benzotriazol-2-yl)phenyl]-methan, bis[2-Hydroxy-5-t-octyl-3(benzotriazol-2-yl)phenyl]-methan, 2-Hydroxy-4-(2-acrylocyloxy-ethoxybenzophenon, 2-Hydroxy-4-(2-hydroxy-3-methacryloxy)propoxybenzophenon, 2,2'-Dihydroxy-4-methoxybenzophenon, 2,4-Dihydroxybenzophenon, 2,2'-Dihydroxy 4,4-dimethoxybenzophenon, 2,2',4,4' Tetrahydroxybenzophenon, Ethyl-2-Cyano-3,3-diphenylacrylat, 2-Ethexyl-2-Cyano-3,3-Diphenylacrylat, 2',2',4-Trihydroxybenzophenon, 2-Hydroxy-4-acryloyloxyethoxybenzophenon (Polymer), 2-Hydroxy-4-acryloyloxyethoxybenzophenon, 4-Hydroxy-4-methoxybenzophenon, 2-Hydroxy-4-n-octoxybenzophenon oder Mischungen davon umfassen.

Bevorzugt umfasst die 3D-Drucktinte 2(2'Hydroxy-5-5-octylphenyl)benzotriazol, 2(2'-Hydroxy-5'-methyl-phenyl)benzotriazol, 2(2'Hydroxy-5-5-octylphenyl)benzotriazol, 2-Hydroxy-4-(2-hydroxy-3-methacryloxy)propoxybenzophenon oder Mischungen davon, besonders bevorzugt 2(2'Hydroxy-5-5-octylphenyl)benzotriazol, 2(2'Hydroxy-5-5-octylphenyl)benzotriazol oder Mischungen davon als UV-Absorber.

Der Gesamtanteil an wenigstens einem UV-Absorber liegt in der Drucktinte, vorzugsweise UV-Drucktinte, bevorzugt in einem Bereich von 0,01 Gew.-% bis 5,1 Gew.-%, besonders bevorzugt in einem Bereich von 0,07 Gew.-% bis 3,9 Gew.-%, und besonders bevorzugt in einem Bereich von 0,09 Gew.-% bis 3,1 Gew.-%, jeweils bezogen auf das Gesamtgewicht der 3D-Drucktinte. Vorstehend genannte Bereiche beziehen sich sowohl auf die Verwendung eines UV-Absorbers als auch auf die Verwendung einer Mischung von UV-Absorbern.

Der Gesamtanteil an wenigstens einem Additiv liegt in der 3D-Drucktinte bevorzugt in einem Bereich von 0,0 Gew.-% bis 10,0 Gew.-%, besonders bevorzugt in einem Bereich von 0,01 Gew.-% bis 5,0 Gew.-%, und ganz besonders bevorzugt in einem Bereich von 0,02 Gew.-% bis 3,0 Gew.-%, jeweils bezogen auf das Gesamtgewicht der 3D-Drucktinte. Die genannten Bereiche gelten für die Verwendung einer Art an Additiv, einer Mischung aus voneinander verschiedenen Additivarten sowie einer Mischung aus voneinander verschiedenen Additiven einer Additivart.

Es versteht sich von selbst, dass die einzelnen Komponenten der 3D-Drucktinte so auszuwählen sind, dass sich deren Anteile nicht auf über 100 Gew.-% addieren.

Das Verfahren zur Herstellung eines Brillenglases auf einem vorbeschichten Substrat umfasst die folgenden Schritte:
i. Bereitstellen eines beschichteten Substrats,
ii. Bereitstellen eines dreidimensionalen Modells des Brillenglases,
iii. Digitales Zerschneiden des dreidimensionalen Modells aus Schritt ii. in einzelne zweidimensionale Lagen,
iv. Bereitstellen wenigstens einer 3D-Drucktinte,
v. Aufbau des Brillenglases aus der Summe der einzelnen zweidimensionalen Lagen aus Schritt iii. mittels eines Druckvorgangs auf dem Substrat,
vi. Aushärtung des Brillenglases, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann,
vii. optional Fräsen und/oder Schleifen und/oder Drehen und/oder Polieren der in Schritt vi. erhaltenen Oberfläche des Brillenglases, welche nicht an das Substrat angrenzt,
viii. Ablösen des in Schritt vii. erhaltenen Brillenglases vom Substrat,
ix. optional Beschichten der der Substrat abgewandten Oberfläche des Brillenglases,
x. optional Formranden des in Schritt ix. erhaltenen Brillenglases.

Das Ablösen des Brillenglases vom Substrat kann alternativ auch vor der optionalen mechanischen Nachbearbeitung in Schritt vii. erfolgen.

Das 3D-Drucken eines Brillenglases beginnt mit der Bereitstellung eines dreidimensionalen Modells, vorzugsweise CAD-Modells. Dieses dreidimensionale Modell definiert die dreidimensionale Geometrie des Brillenglases, d.h. die dem Substrat gegenüberliegende Oberfläche sowie die Zylinderrandfläche.

Bei einer Ausführungsform wird die gewünschte Einfärbung des Brillenglases mittels verschiedener Farbmittel vorab berechnet. Die Absorption des Brillenglases ergibt sich aus der Zahl der farbig übereinander gedruckten Volumenelemente. Dabei erscheint die Farbe des Brillenglases für den Nutzer als Summe aller Absorptionen im Brillenglas. Entsprechend können im dreidimensionalen Modell mehrere Lage mit jeweils mindestens einer farbgebenden Komponente übereinander gestapelt werden. Die additive Wirkung von mindestens zwei farbstoffhaltigen Lagen kann berechnet werden.

## Patentansprüche

1. Verfahren zur Herstellung eines Brillenglases, wobei das Verfahren die folgenden Schritte umfasst:
i. Bereitstellen eines beschichteten Substrats, wobei das Substrat optional mit einer ablösbaren Haftschicht belegt ist und die Beschichtung des Substrats aus der Gruppe bestehend aus wenigstens einer Hartlackschicht, wenigstens einer Entspiegelungsschicht, wenigstens einer elektrisch leitfähigen oder halbleitenden Schicht, wenigstens einer Antibeschlagsschicht und/oder wenigstens einer Clean-Coat-Schicht ausgewählt ist,
ii. Bereitstellen eines dreidimensionalen Modells des Brillenglases,
iii. Digitales Zerschneiden des dreidimensionalen Modells aus Schritt ii. in einzelne zweidimensionale Lagen,
iv. Bereitstellen wenigstens einer 3D-Drucktinte,
v. Aufbau des Brillenglases aus der Summe der einzelnen zweidimensionalen Lagen aus Schritt iii. mittels eines Druckvorgangs auf dem Substrat,
vi. Aushärtung des Brillenglases, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann,
vii. optional Fräsen und/oder Schleifen und/oder Drehen und/oder Polieren der in Schritt vi. erhaltenen Oberfläche des Brillenglases, welche nicht an das Substrat angrenzt,
viii. Ablösen des in Schritt vii. erhaltenen Brillenglases mitsamt der Beschichtung vom Substrat,
ix. optional Beschichten der der Substrat abgewandten Oberfläche des Brillenglases,
x. optional Formranden des in Schritt ix. erhaltenen Brillenglases.

2. Verfahren nach Anspruch 1, **dadurch gekennzeichnet,**
**dass** das Substrat ausgehend vom Substrat mit folgenden Schichten belegt ist:
a) optional eine ablösbare Haftschicht,
b) wenigstens eine Clean-Coat-Schicht und/oder wenigstens eine Antibeschlagsschicht
c) wenigstens eine Entspiegelungsschicht,
d) optional wenigstens eine elektrisch leitfähige oder halbleitende Schicht,
e) wenigstens eine Hartlackschicht.

3. Verfahren nach einem der vorstehenden Ansprüche, **dadurch gekennzeichnet, dass** die wenigstens eine elektrisch leitfähige oder halbleitende Schicht Teil der Entspiegelungsschicht ist.

4. Verfahren nach einem der vorstehenden Ansprüche, **dadurch gekennzeichnet, dass** die ablösbare Haftschicht Alkyltrihalogensilane umfasst.

5. Verfahren nach einem der vorstehenden Ansprüche, **dadurch gekennzeichnet, dass** das vorbeschichtete Substrat konvex oder konkav ausgeformt ist und die Oberflächentopographie des vorbeschichteten Substrats aus der Gruppe bestehend aus sphärisch, ashpärisch, torisch, atorisch, progressiv und plan ausgewählt ist.

6. Verfahren nach einem der vorstehenden Ansprüche, **dadurch gekennzeichnet, dass** das Brillenglas auf der dem Substrat gegenüberliegenden Seite mit wenigstens einer Schicht, ausgewählt der Gruppe bestehend aus wenigstens einer Hartlackschicht, wenigstens einer Entspiegelungsschicht, wenigstens einer elektrisch leitfähigen oder halbleitenden Schicht, wenigstens einer Antibeschlagsschicht und wenigstens einer Clean-Coat-Schicht, beschichtet ist.

7. Verfahren nach einem der vorstehenden Ansprüche, **dadurch gekennzeichnet, dass** die Oberfläche des Brillenglases, welche vom Substrat abgewandt ist, ausgehend von dieser Oberfläche folgende Schichtenfolge umfasst:
a) wenigstens eine Hartlackschicht,
b) optional wenigstens eine elektrisch leitfähige oder halbleitende Schicht,
c) wenigstens eine Entspiegelungsschicht,
d) optional wenigstens eine Clean-Coat-Schicht und/oder wenigstens eine Antibeschlagsschicht.

8. Verfahren nach einem der vorstehenden Ansprüche, **dadurch gekennzeichnet, dass** die 3D-Drucktinte wenigstens eine strahlungshärtbare Komponente und optional wenigstens ein Farbmittel umfasst und die strahlungshärtbare Komponente wenigstens ein Monomer aus der Gruppe bestehend aus (Meth)acrylatmonomeren, Epoxymonomeren, Vinylmonomeren und Allylmonomeren umfasst und
a) i) der Gesamtanteil an wenigstens einer Art an monofunktionalem (Meth)acrylatmonomer in einem Bereich von 0,0 Gew.-% bis 35,0 Gew.-%, bezogen auf das Gesamtgewicht der Drucktinte oder der Gesamtanteil an wenigstens einer Art an monofunktionalem Epoxymonomer, Vinyl- oder Allylmonomer oder einer Mischung voneinander verschiedener monofunktionaler (Meth)acrylatmonomere, Epoxymonomere, Vinyl- oder Allylmonomere jeweils in einem Bereich von 0,0 Gew.-% bis 60 Gew.-%, jeweils bezogen auf das
b) Gesamtgewicht der Drucktinte und/oder ii) der Gesamtanteil an wenigstens einer Art an difunktionalem (Meth)acrylatmonomer, Epoxymonomer, Vinyl- oder Allylmonomer oder einer Mischung voneinander verschiedener difunktionaler (Meth)acrylatmonomere, Epoxymonomere, Vinyl- oder Allylmonomere jeweils in einem Bereich 32,0 Gew.-% bis 99 Gew.-%, jeweils bezogen auf das Gesamtgewicht der Drucktinte und/oder iii) der Gesamtanteil an wenigstens einer Art an trifunktionalem (Meth)acrylatmonomer, Epoxymonomer, Vinyl- oder Allylmonomer oder einer Mischung voneinander verschiedener trifunktionaler (Meth)acrylatmonomere, Epoxymonomere, Vinyl- oder Allylmonomere jeweils in einem Bereich von 1,0 Gew.-% bis 51,0 Gew.-%, jeweils bezogen auf das Gesamtgewicht der Drucktinte und/oder iv) der Gesamtanteil an wenigstens einer Art an tetrafunktionalem (Meth)acryl-atmonomer, Epoxymonomer, Vinyl- oder Allylmonomer oder einer Mischung voneinander verschiedener tetrafunktionaler (Meth)acrylatmonomere, Epoxymonomere, Vinyl- oder Allylmonomere jeweils in einem Bereich von 0 Gew.-% bis 16 Gew.-%, jeweils bezogen auf das Gesamtgewicht der Drucktinte, liegt
oder
c) die Drucktinte wenigstens eine monofunktionale strahlungshärtbare Komponente und wenigstens eine difunktionale strahlungshärtbare Komponente im Gewichtsverhältnis 1 : 1 oder wenigstens eine monofunktionale strahlungshärtbare Komponente und wenigstens eine trifunktionale strahlungshärtbare Komponente im Gewichtsverhältnis 1 : 5 oder wenigstens eine difunktionale strahlungshärtbare Komponente und wenigstens eine trifunktionale strahlungshärtbare Komponente im Gewichtsverhältnis 1 : 1 oder wenigstens eine difunktionale strahlungshärtbare Komponente und wenigstens eine tetrafunktionale strahlungshärtbare Komponente im Gewichtsverhältnis 5 : 1 oder wenigstens eine monofunktionale strahlungshärtbare Komponente und wenigstens eine difunktionale strahlungshärtbare Komponente und wenigstens eine trifunktionale strahlungshärtbare Komponente im Gewichtsverhältnis 1 : 5 : 1 umfasst.

9. Verfahren nach einem der vorstehenden Ansprüche, **dadurch gekennzeichnet, dass** die 3D-Drucktinte, eine Viskosität aus einem Bereich von 4 mPa·s bis 56 mPa·s aufweist.

## Claims

1. Process for producing a spectacle lens, wherein the process comprises the following steps:
i. providing a coated substrate, where the substrate has optionally been covered with a detachable bonding layer and the coating of the substrate is selected from the group consisting of at least one hard lacquer layer, at least one antireflection layer, at least one electrically conductive or semiconductive layer, at least one antifog layer and/or at least one clean-coat layer,
ii. providing a three-dimensional model of the spectacle lens,
iii. digitally cutting the three-dimensional model from step ii. into individual two-dimensional slices,
iv. providing at least one 3D printing ink,
v. constructing the spectacle lens from the sum total of the individual two-dimensional slices from step iii. by means of a printing operation on the substrate,
vi. curing the spectacle lens, wherein the curing can be effected fully or partially after each application of individual volume elements or after each application of a slice of volume elements, and the partial curing can be completed on completion of the printing process,
vii. optionally machining and/or grinding and/or turning and/or polishing the surface of the spectacle lens obtained in step vi. that does not adjoin the substrate,
viii. detaching the spectacle lens obtained in step
vii. together with the coating from the substrate,
ix. optionally coating the surface of the spectacle lens remote from the substrate,
x. optionally edging the spectacle lens obtained in step ix.

2. Process according to Claim 1, **characterized in that** the substrate, proceeding from the substrate, has been covered with the following layers:
a) optionally a detachable bonding layer,
b) at least one clean-coat layer and/or at least one antifog layer,
c) at least one antireflection layer,
d) optionally at least one electrically conductive or semiconductive layer,
e) at least one hard lacquer layer.

3. Process according to either of the preceding claims, **characterized in that** the at least one electronically conductive or semiconductive layer is part of the antireflection layer

4. Process according to any of the preceding claims, **characterized in that** the detachable bonding layer comprises alkyltrihalosilanes.

5. Process according to any of the preceding claims, **characterized in that** the precoated substrate is in convex or concave form and the surface topography of the precoated substrate is selected from the group consisting of spherical, aspherical, toric, atoric, progressive and planar.

6. Process according to any of the preceding claims, **characterized in that** the spectacle lens has been coated on the opposite side from the substrate with at least one layer selected from the group consisting of at least one hard lacquer layer, at least one antireflection layer, at least one electrically conductive or semiconductive layer, at least one antifog layer and at least one clean-coat layer.

7. Process according to any of the preceding claims, **characterized in that** the surface of the spectacle lens remote from the substrate, proceeding from said surface, comprises the following layer sequence:
a) at least one hard lacquer layer,
b) optionally at least one electrically conductive or semiconductive layer,
c) at least one antireflection layer,
d) optionally at least one clean-coat layer and/or at least one antifog layer.

8. Process according to any of the preceding claims, **characterized in that** the 3D printing ink comprises at least one radiation-curable component and optionally at least one colorant, and the radiation-curable component comprises at least one monomer from the group consisting of (meth)acrylate monomers, epoxy monomers, vinyl monomers and allyl monomers and
a) i) the total proportion of at least one kind of monofunctional (meth)acrylate monomer is within a range from 0.0% by weight to 35.0% by weight, based on the total weight of the printing ink, or the total proportion of at least one kind of monofunctional epoxy monomer, vinyl monomer or allyl monomer or of a mixture of different monofunctional (meth)acrylate monomers, epoxy monomers, vinyl monomers or allyl monomers is in each case within a range from 0.0% by weight to 60% by weight, based in each case on the
b) total weight of the printing ink, and/or ii) the total proportion of at least one kind of difunctional (meth)acrylate monomer, epoxy monomer, vinyl monomer or allyl monomer or of a mixture of different difunctional (meth)acrylate monomers, epoxy monomers, vinyl monomers or allyl monomers is in each case within a range from 32.0% by weight to 99% by weight, based in each case on the total weight of the printing ink, and/or iii) the total proportion of at least one kind of trifunctional (meth)acrylate monomer, epoxy monomer, vinyl monomer or allyl monomer or of a mixture of different trifunctional (meth)acrylate monomers, epoxy monomers, vinyl monomers or allyl monomers is in each case within a range from 1.0% by weight to 51.0% by weight, based in each case on the total weight of the printing ink, and/or iv) the total proportion of at least one kind of tetrafunctional (meth)acrylate monomer, epoxy monomer, vinyl monomer or allyl monomer or of a mixture of different tetrafunctional (meth)acrylate monomers, epoxy monomers, vinyl monomers or allyl monomers is in each case within a range from 0% by weight to 16% by weight, based in each case on the total weight of the printing ink,
or
c) the printing ink comprises at least one monofunctional radiation-curable component and at least one difunctional radiation-curable component in a weight ratio of 1:1 or at least one monofunctional radiation-curable component and at least one trifunctional radiation-curable component in a weight ratio of 1:5 or at least one difunctional radiation-curable component and at least one trifunctional radiation-curable component in a weight ratio of 1:1 or at least one difunctional radiation-curable component and at least one tetrafunctional radiation-curable component in a weight ratio of 5:1 or at least one monofunctional radiation-curable component and at least one difunctional radiation-curable component and at least one trifunctional radiation-curable component in a weight ratio of 1:5:1.

9. Process according to any of the preceding claims, **characterized in that** the 3D printing ink has a viscosity from a range from 4 mPa·s to 56 mPa·s.

## Revendications

1. Procédé de fabrication d'un verre de lunettes, le procédé comprenant les étapes suivantes :
i. mise à disposition d'un substrat revêtu, le substrat étant éventuellement revêtu d'une couche adhésive amovible et le revêtement de substrat étant choisi dans le groupe constitué par au moins une couche de laque dure, au moins une couche antireflet, au moins une couche électriquement conductrice ou semi-conductrice, au moins une couche antibuée et/ou au moins une couche Clean Coat,
ii. mise à disposition d'un modèle tridimensionnel du verre de lunettes,
iii. découpe numérique du modèle tridimensionnel de l'étape ii. en différentes couches bidimensionnelles,
iv. mise à disposition d'au moins une encre d'impression 3D,
v. construction du verre de lunettes à partir de la somme des différentes couches bidimensionnelles de l'étape iii. au moyen d'un procédé d'impression sur le substrat,
vi. durcissement du verre de lunettes, le durcissement pouvant avoir lieu complètement ou partiellement après application de différents éléments volumiques ou après application d'une couche d'éléments volumiques et le durcissement partiel pouvant être complété après la fin du procédé d'impression,
vii. éventuellement fraisage et/ou meulage et/ou tournage et/ou polissage de la surface du verre de lunettes, qui n'est pas adjacente au substrat, obtenue dans l'étape vi.,
viii.décollement du verre de lunettes, en ce compris le revêtement, obtenu dans l'étape vii, du substrat,
ix. éventuellement revêtement de la surface du verre de lunettes opposée au substrat,
x. éventuellement façonnage des bords du verre de lunettes obtenu dans l'étape ix.

2. Procédé selon la revendication 1, **caractérisé en ce que** le substrat est revêtu, partant du substrat, par les couches suivantes :
a) éventuellement une couche adhésive amovible,
b) au moins une couche Clean Coat et/ou au moins une couche antibuée,
c) au moins une couche antireflet,
d) éventuellement au moins une couche électriquement conductrice ou semi-conductrice,
e) au moins une couche de laque dure.

3. Procédé selon l'une quelconque des revendications précédentes, **caractérisé en ce que** ladite au moins une couche électriquement conductrice ou semi-conductrice fait partie de la couche antireflet.

4. Procédé selon l'une quelconque des revendications précédentes, **caractérisé en ce que** la couche adhésive amovible comprend des alkyltrihalogénosilanes.

5. Procédé selon l'une quelconque des revendications précédentes, **caractérisé en ce que** le substrat prérevêtu présente une forme convexe ou concave et la topographie de surface du substrat prérevêtu est choisie dans le groupe constitué par sphérique, asphérique, torique, atorique, progressive et plane.

6. Procédé selon l'une quelconque des revendications précédentes, **caractérisé en ce que** le verre de lunettes est revêtu, sur le côté opposé au substrat, d'au moins une couche, choisie dans le groupe constitué par au moins une couche de laque dure, au moins une couche antireflet, au moins une couche électriquement conductrice ou semi-conductrice, au moins une couche antibuée et au moins une couche Clean Coat.

7. Procédé selon l'une quelconque des revendications précédentes, **caractérisé en ce que** la surface du verre de lunettes, qui est opposée au substrat, comprend l'ordre des couches suivant, partant de cette surface :
a) au moins une couche de laque dure,
b) éventuellement au moins une couche électriquement conductrice ou semi-conductrice,
c) au moins une couche antireflet,
d) éventuellement au moins une couche Clean Coat et/ou au moins une couche antibuée.

8. Procédé selon l'une quelconque des revendications précédentes, **caractérisé en ce que** l'encre d'impression 3D comprend au moins un composant durcissable par un rayonnement et éventuellement au moins un colorant et le composant durcissable par un rayonnement comprend au moins un monomère du groupe constitué par les monomères de (méth)acrylate, les monomères époxy, les monomères de vinyle et les monomères d'allyle et
a) i) la proportion totale d'au moins un type de monomère monofonctionnel de (méth)acrylate se situe dans une plage de 0,0% en poids à 35,0% en poids, par rapport au poids total de l'encre d'impression ou la proportion totale d'au moins un type de monomère époxy, de monomère de vinyle ou d'allyle monofonctionnel ou d'un mélange de monomères de (méth)acrylate, de monomères époxy, de monomères de vinyle ou d'allyle monofonctionnels différents les uns des autres se situe à chaque fois dans une plage de 0,0% en poids à 60% en poids, à chaque fois par rapport
b) au poids total de l'encre d'impression et/ou ii) la proportion totale d'au moins un type de monomère de (méth)acrylate, de monomère époxy, de monomère de vinyle ou d'allyle difonctionnel ou d'un mélange de monomères de (méth)acrylate, de monomères époxy, de monomères de vinyle ou d'allyle difonctionnels différents les uns des autres se situe à chaque fois dans une plage de 32,0% en poids à 99% en poids, à chaque fois par rapport au poids total de l'encre d'impression ou iii) la proportion totale d'au moins un type de monomère de (méth)acrylate, de monomère époxy, de monomère de vinyle ou d'allyle trifonctionnel ou d'un mélange de monomères de (méth)acrylate, de monomères époxy, de monomères de vinyle ou d'allyle trifonctionnels différents les uns des autres se situe à chaque fois dans une plage de 1,0% en poids à 51,% en poids, à chaque fois par rapport au poids total de l'encre d'impression et/ou iv) la proportion totale d'au moins un type de monomère de (méth)acrylate, de monomère époxy, de monomère de vinyle ou d'allyle tétrafonctionnel ou d'un mélange de monomères de (méth)acrylate, de monomères époxy, de monomères de vinyle ou d'allyle tétrafonctionnels différents les uns des autres se situe à chaque fois dans une plage de 0% en poids à 16% en poids, à chaque fois par rapport au poids total de l'encre d'impression ou
c) l'encre d'impression comprend au moins un composant monofonctionnel durcissable par un rayonnement et au moins un composant difonctionnel durcissable par un rayonnement dans un rapport pondéral de 1:1 ou au moins un composant monofonctionnel durcissable par un rayonnement et au moins un composant trifonctionnel durcissable par un rayonnement dans un rapport pondéral de 1:5 ou au moins un composant difonctionnel durcissable par un rayonnement et au moins un composant trifonctionnel durcissable par un rayonnement dans un rapport pondéral de 1:1 ou au moins un composant difonctionnel durcissable par rayonnement et au moins un composant tétrafonctionnel durcissable par un rayonnement dans un rapport pondéral de 5:1 ou au moins un composant monofonctionnel durcissable par un rayonnement et au moins un composant difonctionnel durcissable par un rayonnement et au moins un composant trifonctionnel durcissable par un rayonnement dans un rapport pondéral de 1:5:1.

9. Procédé selon l'une quelconque des revendications précédentes, **caractérisé en ce que** l'encre d'impression 3D présente une viscosité dans la plage de 4 mPa.s à 56 mPa.s.
